Europäisches Patentamt

**European Patent Office**

**Office européen des brevets**

(11) Numéro de publication: **0 133 840**
**A1**

## DEMANDE DE BREVET EUROPEEN

(21) Numéro de dépôt: **84450018.1**

(22) Date de dépôt: **29.06.84**

(51) Int. Cl.⁴: **G 05 B 19/04**

(30) Priorité: **06.07.83 FR 8311380**

(43) Date de publication de la demande:
**06.03.85 Bulletin 85/10**

(84) Etats contractants désignés:
**AT BE CH DE FR GB IT LI LU NL SE**

(71) Demandeur: **S.A.R.L. SEMY ENGINEERING**
**74 Route de St Georges d'Orques**
**F-34990 JUVIGNAC MONTPELLIER(FR)**

(72) Inventeur: **Hugues, Jean Benoist Résidence du Chateau
d'O**
**Villa No. 37 2429 Avenue du Père-Soulas**
**F-34100 Montpellier(FR)**

(74) Mandataire: **Ravina, Bernard**
**Cabinet Bernard RAVINA 24, boulevard Riquet**
**F-31000 Toulouse(FR)**

(54) **Contrôleur programmable de processus industriel prémuni des bruits industriels.**

(57) La présente invention a pour objet un controleur de processus programmable.

Ce controleur comporte une unité centrale de traitement (1), un ou plusieurs boitiers mémoires mortes (2) pour le stockage du logiciel de base, un ou plusieurs boitiers mémoires vives (3) pour le stockage du logiciel d'application, un ou plusieurs modules entrées/sorties (4), (5), (6), (7), (8), (9) et (10) assurant la communication du dit controleur avec le monde extérieur et notamment avec les organes de la machine qu'il commande, un module (89) d'acquisition d'un paramètre physique à controler, un module (16) de régulation de ce paramètre physique, un bloc (14) d'alimentation générale reccordé aux lignes (11) et (12) de réseau de distribution d'énergie électrique et un bus adresses (1A), un bus commande (1B) et bus données (1C) raccordés aux différents composants.

Le controleur selon l'invention se caractérise essentielle-ment en ce qu'il est doté de moyens pour le premunir des bruits industriels c'est à dire des parasites véhicules par les lignes (11) et (12), des parasites générés par les organes de la machine et des micro coupures et baisses de la tension du réseau de distribution.

fig 1

EP 0 133 840 A1

_1_

CONTROLEUR PROGRAMMABLE DE PROCESSUS INDUSTRIEL PREMUNI DES
BRUITS INDUSTRIELS.

La présente invention a pour objet un controleur programmable de
processus industriel prémuni des bruits industriels.

Par controleur programmable, on entend un dispositif apte à assurer la commande et le contrôle d'un processus suivant des
séquences ou programmes déterminés par l'utilisateur et susceptibles d'être modifiés au grè de celui-ci.

Le controleur programmable selon la présente invention est du
type de ceux comportant une unité centrale de traitement constituée par un micro processeur, un ou plusieurs modules mémoires
pour le stockage d'informations volatiles et d'informations non
volatiles et des modules entrée/sortie assurant la communication
avec l'extérieur, c'est à dire la communication entre l'unité
centrale et les organes de la machine commandés par le controleur.

On sait qu'un univers fortement bruité risque de compromettre le
bon fonctionnement d'un controleur du type précité et par voie de
conséquence, le bon déroulement du processus industriel.
Pour prémunir les controleurs du type précité des effets des
bruits industriels, il est connu, d'une part, de filtrer le courant d'alimentation et, d'autre part, d'assurer un découplage
optique au niveau des modules entrée/sortie.

L'expérience a démontré que ces solutions jugées généralement
comme suffisantes se révèlent en fait incomplètes pour un controleur fonctionnant dans un univers fortement chargé en bruit.

Il est également nécessaire de prémunir ce type de controleur des effets des coupures de la tension d'alimentation en plaçant l'unité centrale dans une configuration de sécurité maximale.

La solution la plus communément employée consiste en l'utilisation d'un monostable qui maintient l'unité centrale dans une configuration de sécurité maximale pendant un temps déterminé inversant 100 ms, dés le retour du courant.

A cet effet, ce monostable soumet la broche (reset) de l'unité centrale à un signal approprié.

Il est à noter que ce monostable détecte la coupure du courant, non pas sur le réseau de distribution du courant électrique mais au niveau de l'alimentation régulée du controleur.

Cette solution donne entière satisfaction dans le cas de coupure de durée relativement longue, de l'ordre par exemple de quelques dizaine de milli secondes. Par contre, dans le cas de micro-coupure dont la durée n'excède pas quelques dizaines de micro secondes, le monostable ne réagit pas à l'effet de cette micro-coupure et ne peut maintenir l'unité centrale dans une configuration de sécurité maximale lors du retour du courant.

L'unité centrale quant à elle subit l'effet de la micro-coupure.

Ne pouvant ^etre disposée en configuration de sécurité maximale, cette unité centrale se bloque après le retour du courant.

Comme on le sait, avant de dialoguer avec un des composants du controleur par exemple un boitier mémoire, l'unité centrale sélectionne tout d'abord ce boitier.

Les controleurs étant généralement équipés d'un nombre important

de boitier, la sélection de l'un d'entre eux est effectuée par un organe de sélection commandé par l'unité centrale.

Pour des raisons de coût et de facilité d'intégration, ces organes de sélection sont constitués chacun par des Prom décodeuses. L'inconvénient lié à l'utilisation de Prom décodeuses réside dans le fait que lorsque l'unité centrale lit des informations implantées dans un boitier mémoire à différentes adresses, il se produit à chaque changement d'adresse une désélection du boitier et une resélection rapide, ce qui est générateur de bruit.
On conçoit aisément que cette solution ne peut être mise en oeuvre sur des controleurs fonctionnant dans un univers fortement bruité. Généralement, les controleurs doivent assurer en permanence la surveillance et la régulation d'un paramètre physique mesuré à l'aide de plusieurs sondes qui délivrent chacune une force électro-motrice représentative de la grandeur physique mesurée.

Ce genre de controleur est donc muni d'une unité d'acquisition des données analogiques délivrées par les sondes.
Un des principaux problèmes à résoudre réside dans le fait que la force électro-motrice délivrée par les sondes est très faible et donc susceptible d'être fortement altérée par les bruits industriels, ce qui se traduit par une moindre précision de la mesure.

Pour pallier à cet inconvénient, il est donc nécessaire que l'unité d'acquisition des données présente une bande passante la plus faible possible, ce qui augmente le temps d'acquisition.
Hors, cette carte est associée à une unité centrale de traitement constituée par un micro-processeur.

4

Donc, il est nécessaire que le transfert des données puisse ^etre effectuée rapidement

Jusqu'à présent, aucune solution efficace n'a permis d'allier ces deux critères antagonistes : faible bande passante et rapidité d'acquisition.

Un autre problème à résoudre est celui du aux tensions d'offset ou tension de dérive qui perturbent fortement la force électro--motrice délivrée par les sondes.

Ce problème est accru par la grande précision qui peut ^etre exigée lors de la mesure de la force électro motrice.

De plus, dans le cas où plusieurs sondes sont affectées à la mesure d'un seul paramètre, il est nécessaire que l'erreur introduite par la tension d'offset soit identique pour chacune des sondes et également, il est nécessaire que la bande passante des signaux issus de chaque sonde soit identique.

La présente invention a pour but de pallier les inconvénients précédemment énoncés et de parvenir aux buts sus-évoqués.

A cet effet, le controleur programmable de processus industriel du type de ceux comportant une unité centrale de traitement (1), un ou plusieurs boitiers mémoires mortes (2) pour le stockage du logiciel de base, un ou plusieurs boitiers mémoires vives (3) pour le stockage du logiciel d'application, un ou plusieurs modules entrées/sorties (4), (5), (6), (7), (8), (9) et (10) assurant la communication du dit controleur avec le monde extérieur et notamment avec les organes de la machine qu'il commande, un module (89) d'acquisition d'un paramètre physique à controler, un module (16) de régulation de ce paramètre physique, un bloc (14) d'alimentation générale raccordé aux lignes (11) et (12) du réseau de distribution d'énergie électrique et un bus adresses (1A), un bus commande (1B) et bus données (1C) raccordés aux différents composants du controleur se caractérise essentiellement en ce qu'il est doté de moyens pour le premunir des bruits industriels c'est à dire des parasites véhicules par les lignes (11) et (12), des parasites générés par les organes de la machine et des micro coupures et baisses de la tension du réseau de distribution.

Selon une autre caractéristique de l'invention, le module d'acquisition de données analogiques représentatives par exemple d'une température régnant dans un four à diffusion, est constitué par au moins une voie d'entrée constituée par deux lignes électriques (116) et (117) connectée chacune à une borne du thermo-couple (90) et sur chacune desquelles est prélevée soit la force électro-motrice générée par le thermo-couple ou soit la tension de dérive ou tension d'offset, par un organe (91) pour sélectionner successivement la ligne (116) et la ligne (117), par un étage (92) d'amplification à grand gain pour amplifier d'une manière rapide,soit la force électro-motrice ou soit la tension de dérive, suivant la ligne (116) ou (117) sélectionnée, par au moins deux mémoires analogiques (93) et (94) pour le stockage de la force électro motrice amplifiée ou pour le stockage de la tension de dérive amplifiée, par au moins un organe de démultiplexage (95) placé entre les mémoires analogiques et la sortie de l'étage d'amplification (92), assurant la communication du dit étage avec une mémoire analogique suivant la ligne sélectionnée par l'organe (91) par un étage (96) de compensation de la tension de dérive par modification du courant de polarisation de l'étage (92) en fonction de la tension de dérive mémorisée dans la mémoire (94) et par au moins un canal (98) pour transférer la donnée stockée dans la mémoire analogique vers une des entrées du module (4). Ainsi l'acquisition de données analogiques est effectuée d'une manière rapide tout en conservant une bande passante réduite.

D'autres avantages et caractéristiques de l'invention appara^itront à la lecture de la description d'une forme préférentielle de réalisation en se référant aux dessins annexés en lesquels :

- la figure 1 est une vue schématique du controleur,

- la figure 2 est une vue schématique de la carte unité' centrale du controleur,

- la figure 3 est une vue schématique de la carte mémoire vive du controleur,

- la figure 4 est une vue schématique de la carte entrées analogique,

- la figure 5 est une vue schématique de la carte sorties analogique,

- la figure 6 est une vue schématique de la carte entrée numérique,

- la figure 7 est une vue schématique de la carte sortie numérique,

- la figure 8 est une vue schématique du circuit de remise à l'état initial de l'unité centrale de traitement,

- la figure 9 est une vue schématique du circuit de détection des baisses de tensions et des micros coupures,

- la figure 10 est une vue schématique des moyens mis en oeuvre pour traiter les interruptions et des moyens constituant le circuit "chien de garde" du controleur,

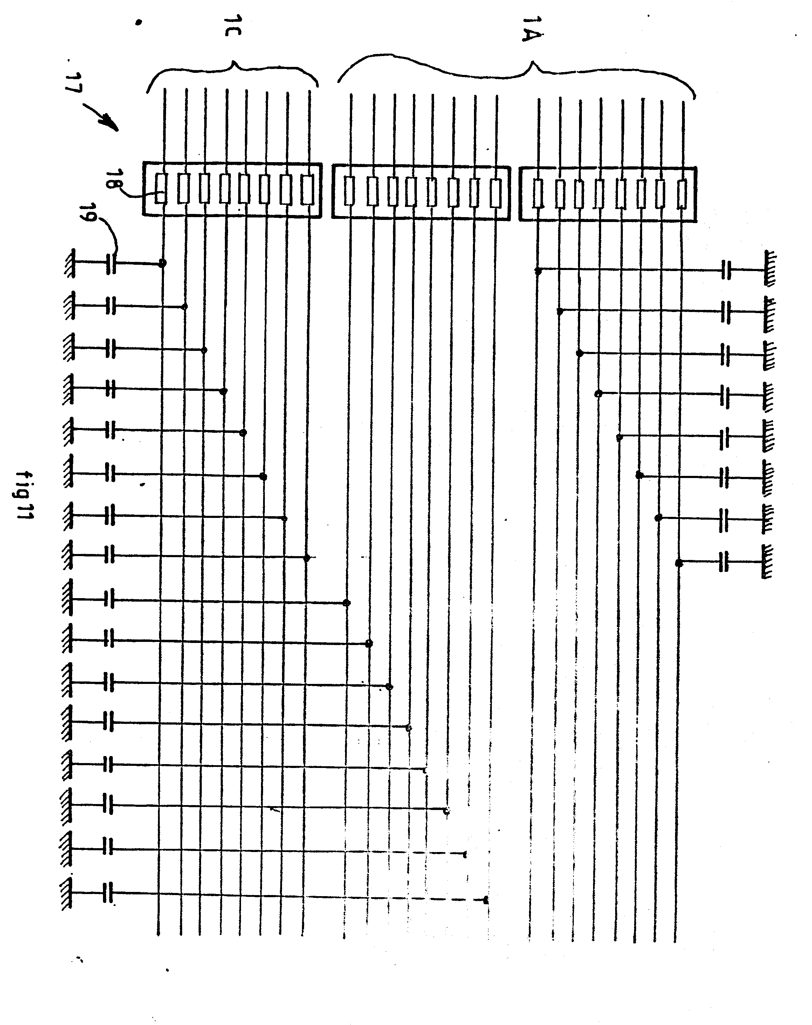

- la figure 11 est une vue montrant un réseau d'adaptation en impédance des différents bus,

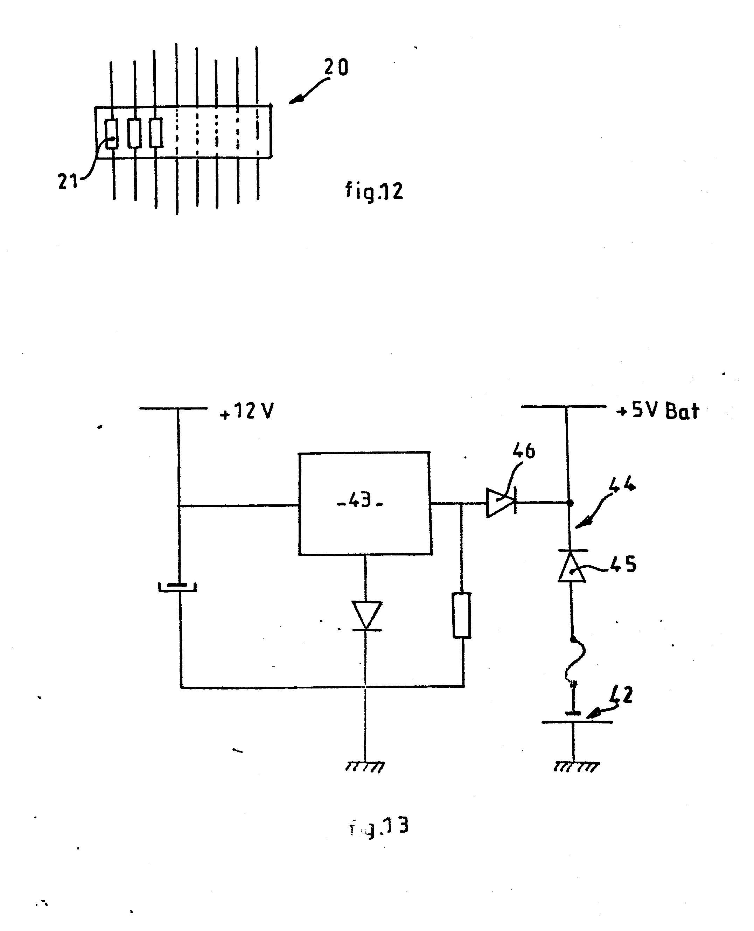

- la figure 12 est une vue d'un réseau de résistance placé sur les différents bus,

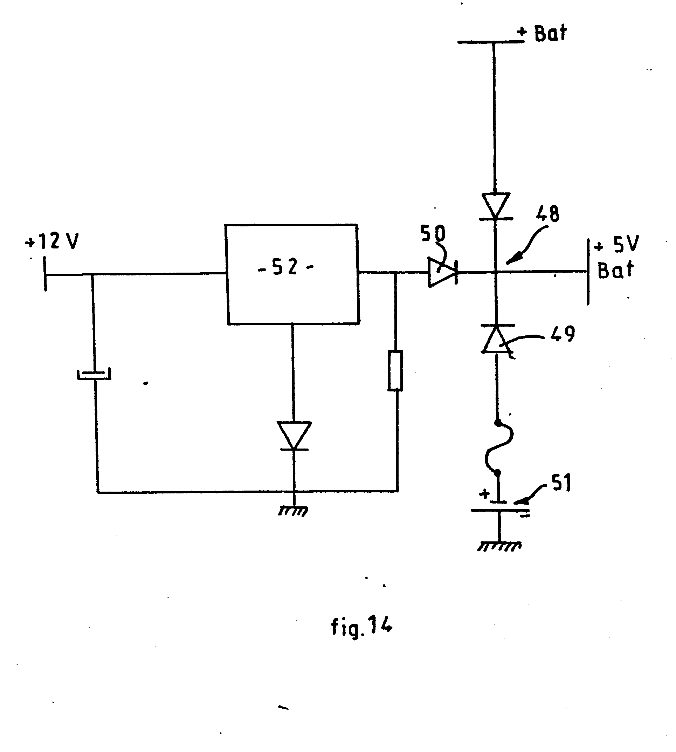

- les figures 13 et 14 sont des vues schématiques de circuits d'alimentation par pile destinés au circuit de remise à l'état initial et de la carte mémoire vive,

- la figure 15 est une vue schématique du module d'acquisition et d'amplification du paramètre physique à controler,

- la figure 16 est une vue d'une autre forme de réalisation du module d'acquisition et d'amplification,

- les figures 17 à 22 sont des vues de détail du module selon la figure 15,

- la figure 23 est une vue du module de régulation.

**0133840**

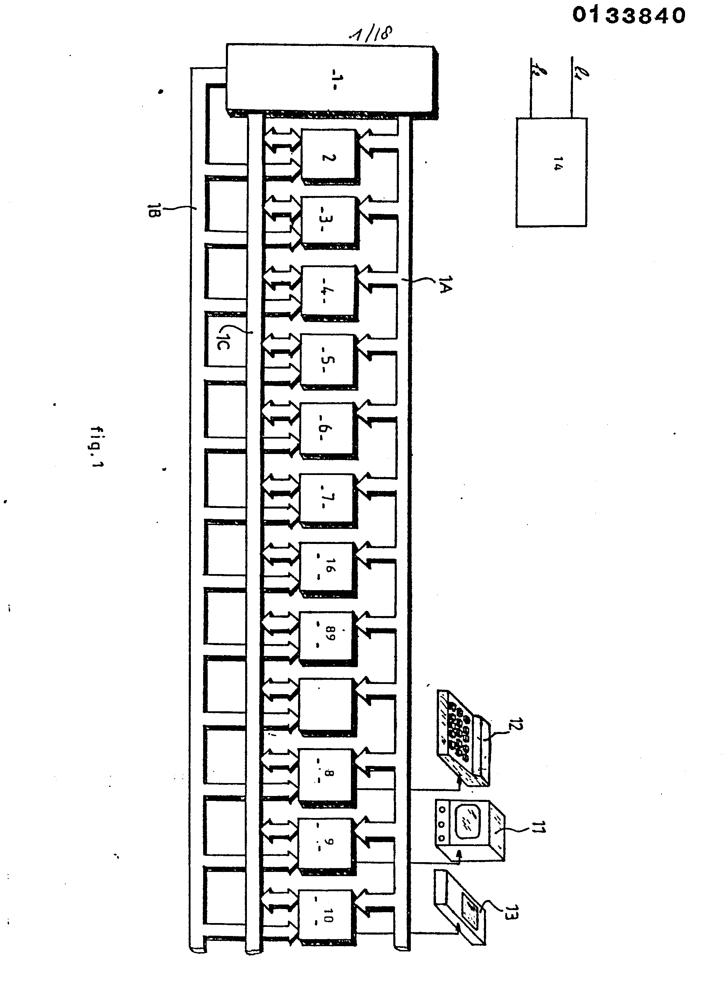

Tel que représenté synoptiquement en fig.1 le contr^oleur de processus programmable selon l'invention est du type de ceux constitué par une unité centrale de traitement (1), par un ou plusieurs bo^itier mémoires (2 et 3) pour le stockage du logiciel de base, du logiciel d'application et de données temporaires, par un ou plusieurs modules entrées, sorties (4 à 10) pour la communication avec l'extérieur, c'està-dire l'échange d'informations entre l'unité centrale de traitement (1) et les organes d'une machine que commande le contr^oleur et l'échange d'informations toujours entre cette unité centrale et divers périphériques tels qu'une unité de visualisation (11), un clavier (12) alphanumérique et un lecteur enregistreur (13) de données sur un support magnétique.

De plus le controleur est doté d'un bloc d'alimentation générale (14) en courant continu.

Ce bloc alimentation est raccordé au réseau de distribution d'énergie électrique figuré par deux lignes électriques (11) et (12) (fig.1).

L'unité centrale de traitement (1) est constitué par un micro processeur par exemple un 6808 commercialisé par la firme "MOTO-ROLA".

Cette unité centrale est disposée sur un support (27) qui reçoit également des boitiers mémoires mortes (2) du type "ROM" ou des boitiers mémoires programmables du type "PROM" ou "EPROM".

Les données stockées dans ces mémoires concernant le logiciel de base du controleur.

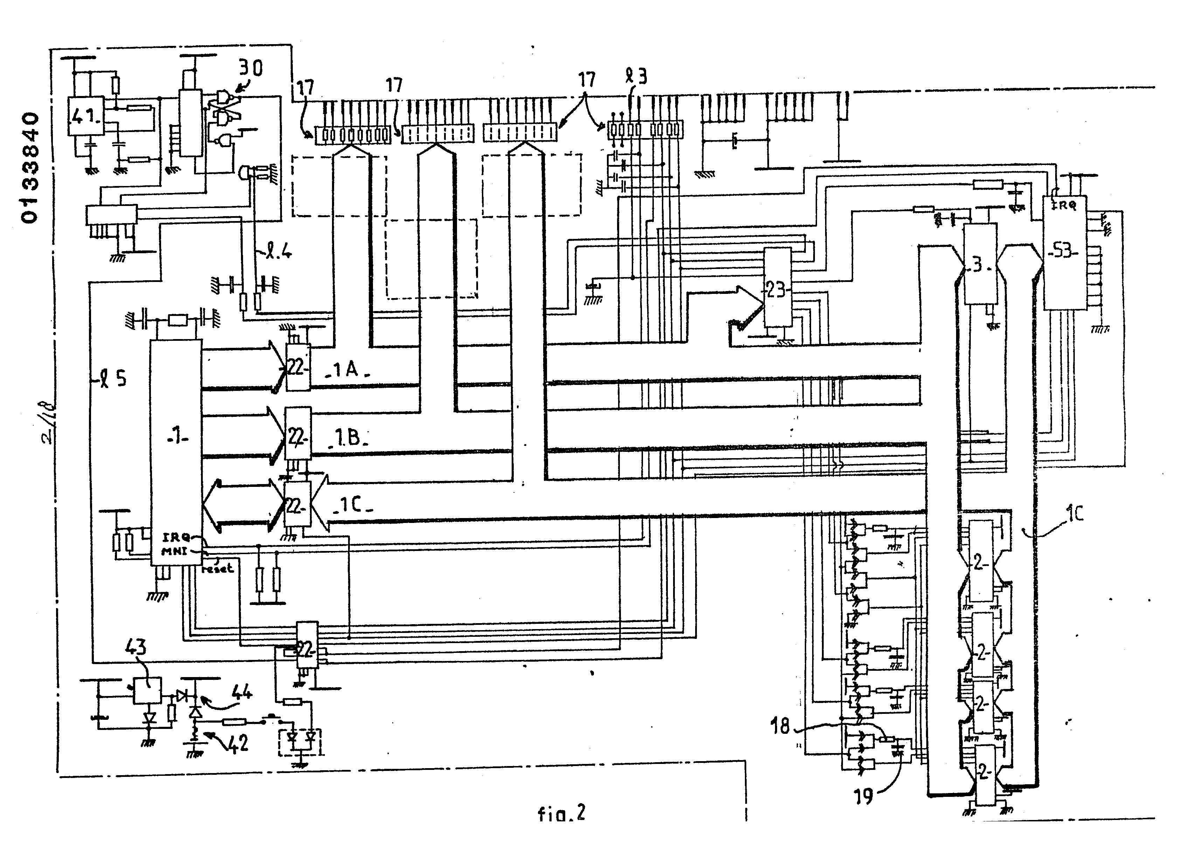

Dans la suite de la description l'ensemble unité centrale (1), boitier mémoire (2) et support (27) sera désigné par carte unité centrale (fig.2).

0133840

Les données temporaires sont stockées dans des mémoires vives (3) du type "RAM" disposés sur un support (27) connu en soit.

Ces données temporaires concernent principalement le logiciel d'application du controleur.

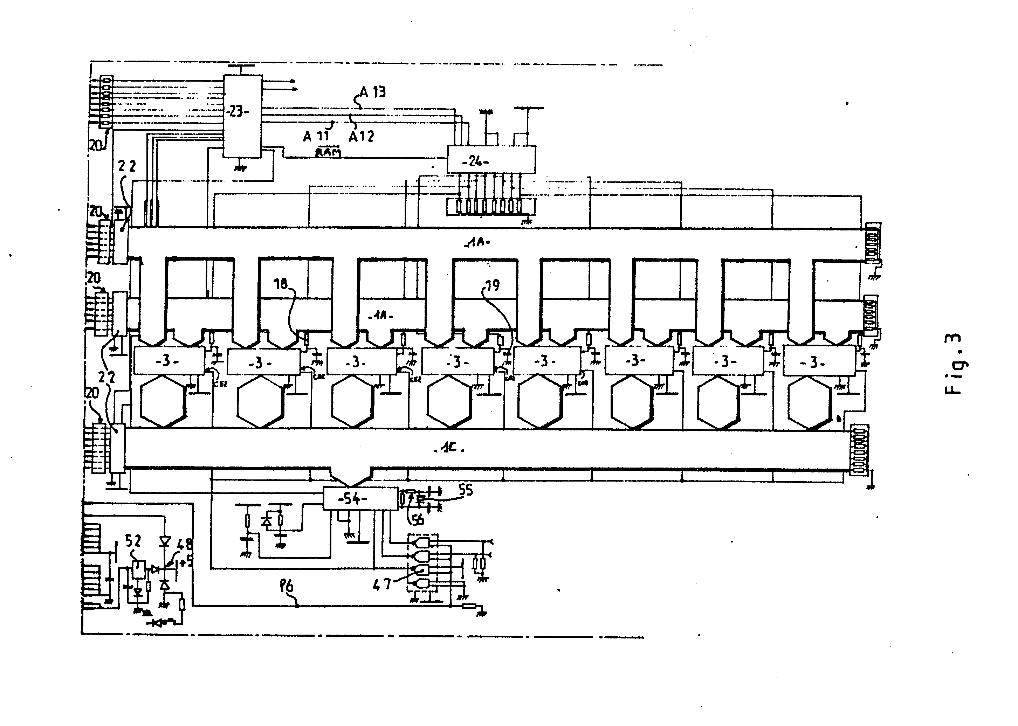

Cet ensemble dans la présente description sera désigné par carte mémoire vive (fig.3).


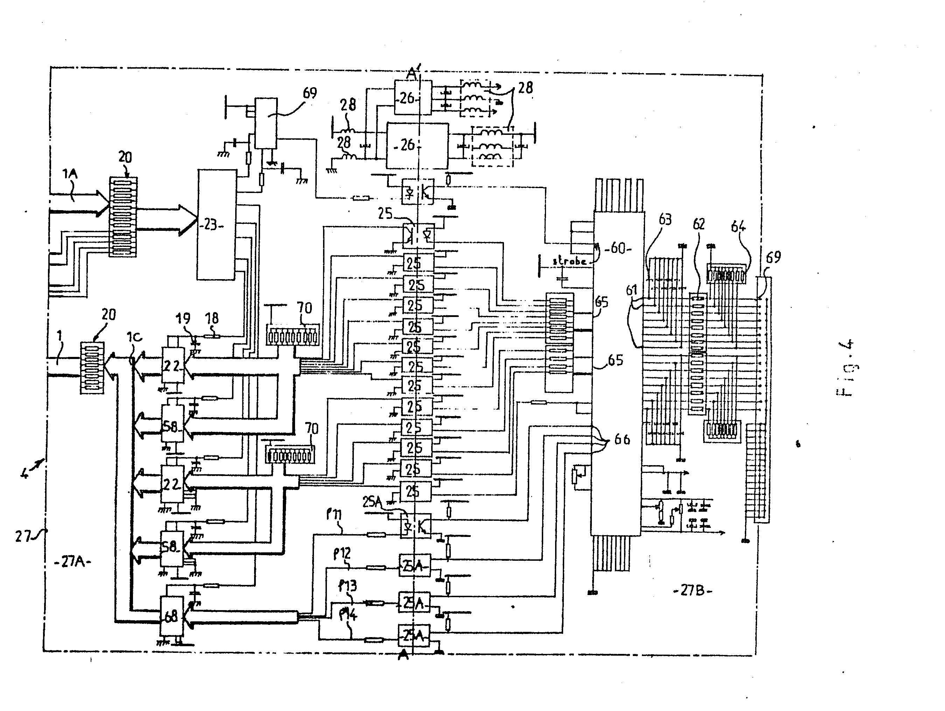

En fig. 4 à 7 sont représentés les modules entrées/sorties les plus significatifs.

Les modules assurant l'échange des données entre les périphériques étant connus de l'homme de l'art, ceux-ci ne seront ni représentés, ni décrits.


Dans le cadre de la présente description, les modules entrées/ sorties seront désignés par :

- carte entrées analogiques (fig.4),

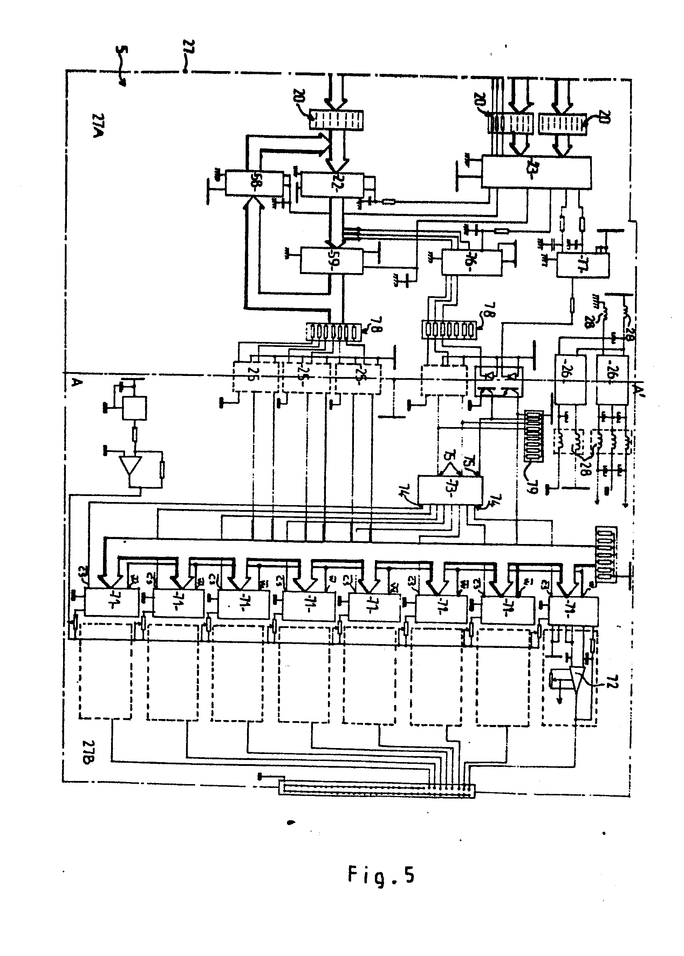

- carte sorties analogiques (fig.5),

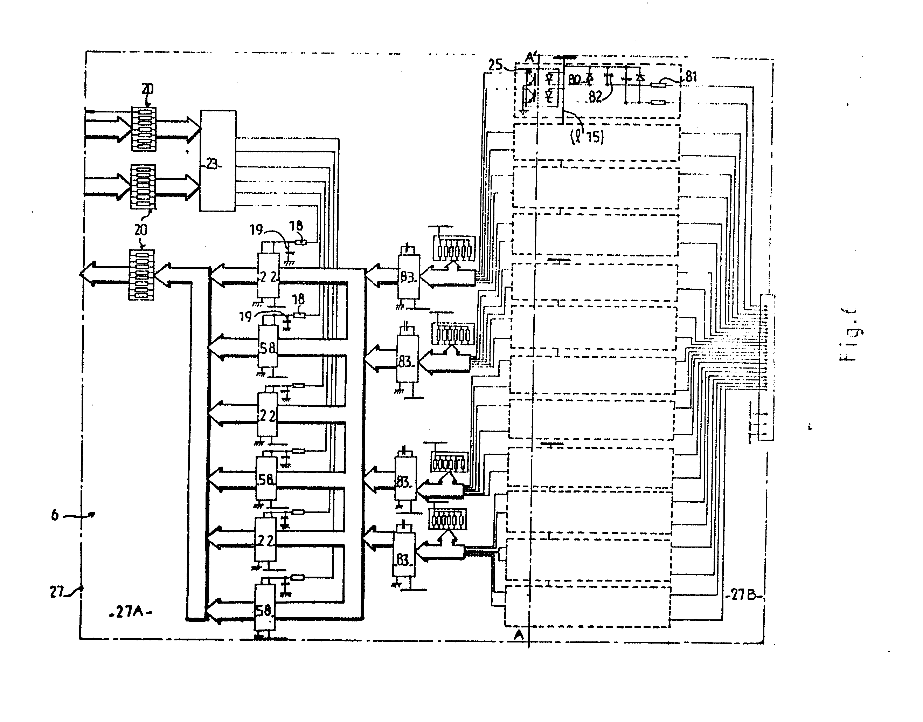

- carte entrées numériques (fig.6),

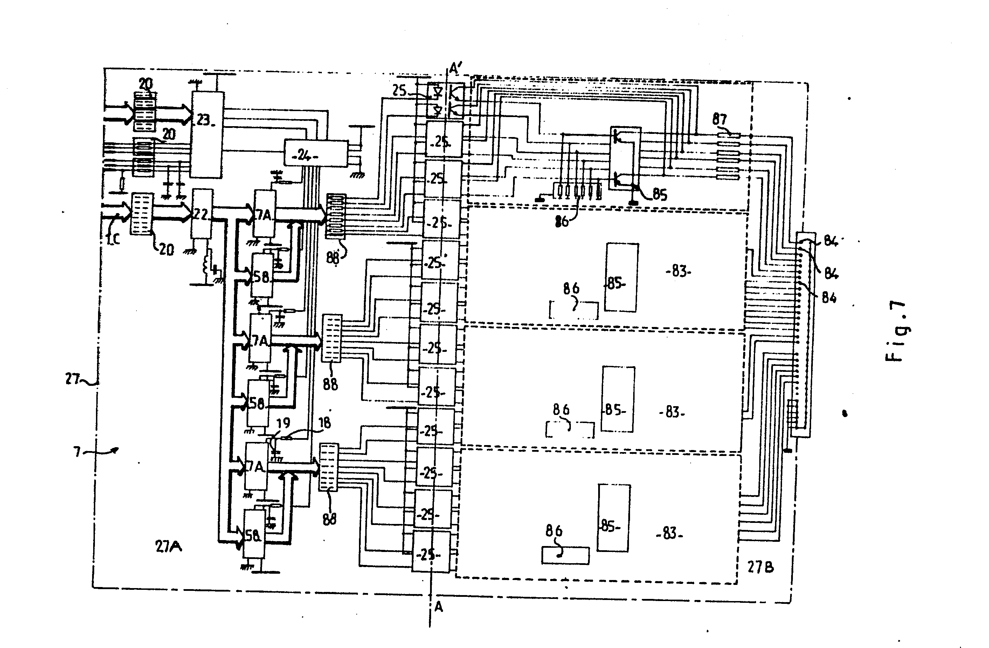

- carte sorties numériques (fig.7).


Dans le cadre de la présente description le contr^oleur assure la

gestion d'un processus de fabrication de puces de circuit intégré et à cet effet, est associé à un four à diffusion d'un type connu en soi.

Pour mesurer la température du four et réguler celle-ci, le cont- r^oleur est en outre équipé d'un module (89) d'acquisition des données représentatives de la température du four et d'un module (16) de régulation de cette température.

Pour fonctionner dans une ambiance industrielle, le contr^oleur est équipé de moyen pour le prémunir des bruits, c'est-à-dire des parasites véhiculés par les lignes d'alimentation (L1) et (L2) ou générés par les organes de la machine.

Le contr^oleur est également doté de moyens pour le prémunir des fluctuation de la tension d'alimentation c'est-à-dire des micros coupures et des baisses de celle-ci.

Pour prémunir le contr^oleur des parasites celui-ci est principalement équipé de plusieurs réseaux (17) d'adaptation en impédance du bus adresse (1A) du bus commande (1B) et du bus données (1C) du contr^oleur.

Ces réseaux sont disposés à la sortie de la carte unité centrale.

Ces réseaux comme on peut le voir en fig.2 sont constitués chacun par des résistances (18) et des condensateurs (19).

Chaque résistance (18) est associée à un condensateur (19) et ces deux éléments passifs sont reliés électriquement à une des lignes des transmissions du bus correspondant.

La résistance (18) est branché en série sur la ligne de transmission, la dite ligne de transmission étant un élément du bus, et le condensateur (19) relie cette ligne à la masse.

On comprend que gr^ace à cette disposition les signaux véhiculés par les différents bus sont exempt de distorsions.

Un autre avantage de cette disposition est que la carte unité centrale peut ^etre retirée ou mise en place lorsque le controleur est sous tension, sans détérioration des composants de la dite carte.

En effet lors de la mise en place, les éventuelles surtensions ou surintensité sont encaissées par les résistances et les condensateurs.

0133840

Pour pouvoir retirer ou mettre en place les autres cartes, toujours le controleur sous tension, celles-ci sont équipées de
réseaux (20) de résistance (21).

Ces réseaux (20) sont disposés sur les différents bus arrivant
sur chaque carte et entre les composants de la carte et l'unité
centrale.

Ces réseaux (20) de résistance sont notamment disposés à l'entrée
de chacune des cartes en amont des composants de celles-ci.

Les résistances (21) de chacun des réseaux (20) comme on peut le
voir en fig.3 à 7 sont disposées en série sur les bus correspondant.

Il est bien évident qu'à chacune de ses résistances pourra ^etre
associé un condensateur comme précédemment décrit.


Pour éviter toute atténuation des informations transitant par les
différents bus, cette atténuation étant due à la présence des
réseaux (17) d'adaptation en impédance et des réseaux (20) de
résistance, les différentes cartes du contr^oleur sont équipées
d'organes connus de l'homme du métier sous le nom de "amplificateur tampon" (22).


Comme on peut le voir en fig.2, la carte unité centrale est équipée de quatre amplificateurs tampons (22) disposés entre l'unité
centrale de traitement (1) et les réseaux (17) d'adaptation des
bus en impédance.

Au niveau de la carte mémoire vive et des modules entrées/sor-
ties, les amplificateurs tampons (22) sont disposés en arrière
des réseaux (20) de résistance (21).

Cette disposition offre en outre avantage d'éviter la détérioration des amplificateurs tampons du contr^oleur si par suite d'un mauvais fonctionnement du contrôoleur deux amplificateurs tampons (22) débitent l'un dans l'autre.

Toujours pour prémunir le controleur des bruits industriels la sélection des composants des différentes cartes est effectué par l'intermédiaire de circuit à logique programmable (23) par exemple du type de ceux connus de l'homme du métier sous le nom de "PAL".

Comme on peut le voir en fig. 2 à 7 chaque carte comporte un circuit à logique programmable (23).

Chaque circuit à logique programmable reçoit sur ses entrées les bus adresse (1A) ainsi que le bus commande (1B) et en fonction de la configuration de ses entrées sélectionne le composant correspondant.

En fig. 2 on peut voir que le circuit à logique programmable (23) de la carte unité centrale est relié électriquement à la portion des bus adresses et commande situées entre les amplificateurs tampons (22) et les réseaux d'adaptation en impédance (17).

En fig. 3 à 7 on peut voir que le circuit à logique programmable (23) de chaque module entrées/sortie est disposé en arrière des réseaux (20) de résistance des bus adresses (1A) et commande (1B).

L'utilisation d'un circuit à logique programmable pour la sélection des composants des différentes cartes offre l'avantage de maintenir un signal de sélection présent sur le composant correspondant pendant toute la durée de l'échange d'informations entre ce dit composant et l'unité centrale de traitement (1).

Il n'est pas exclut d'associer à chaque circuit à logique prog- rammable un circuit de sélection (24) connu en soi qui permet de démultiplexer les signaux de sélection issus du dit circuit à logique programmable pour sélectionner un nombre important de composants.

Une telle disposition se retrouve au niveau de la carte mémoire vive (fig.3).

Sur cette figure on peut voir que l'organe de sélection (24) est activé par les lignes (A11),(A12) et (A13) issues de (23) et sélectionne un des huit boîtiers mémoire vive (3) équipant cette carte.

De plus l'organe de sélection est validé par le signal de sélection général (RAM) qui est généré lorsqu'une des mémoires vives du contrôleur doit être sélectionnée.

Les lignes de selection issues de chaque circuit à logique programmable (23) et les lignes de sélection issues de l'organe de sélection 24 de la carte mémoire vive sont adaptées chacune en impédance par une résistance (18) montées en série sur cette ligne et par un condensateur (19) disposé entre cette ligne et la masse de la carte.

Au niveau des modules entrées/sorties toujours dans le but de prémunir le contrôleur des bruits industriels, il est nécessaire d'assurer une isolation électrique entre l'entrée de chaque module et sa sortie, c'est-à-dire entre le domaine digital de chaque module et son domaine analogique.

Ainsi les parasites et autres bruits générés par les organes de la machine commandée par le contrôleur ne pourront perturber le fonctionnement du contrôleur et notamment de l'unité centrale de traitement.

A cet effet, comme on peut le voir en fig.4 à 7 chaque module entrée/ sortie présente une barrière d'optos coupleurs (25) disposée sur les différents bus, des blocs alimentations (26) régénérés et une plaque (27) de circuit imprimé multicouche dont le dessin, c'est-à-dire la répartition des lignes électriques est réalisée en sorte de laisser appara^itre deux zones (27A) et (27B) de part et d'autre de la barrière d'optos coupleurs (25), dont une, la zone (27A) est située en décade de cette barrière et ne reçoit que les composants digitaux et dont l'autre la zone (27B) est située au-delà de la dite barrière et ne reçoit que les composants analogiques.

De préférence comme on peut le voir sur les figures 4 à 7 les zones (27A) et (27B) sont séparées par une ligne droite fictive AA'transversale au support du circuit imprimé. Comme on le comprend à cheval sur cette ligne droite AA' sont disposés les optos coupleurs (25) ainsi que les blocs alimentation (26).

Chaque bloc alimentation (26) est constitué par un convertisseur DC/DC d'un type connu de l'homme de l'art.

L'avantage d'un tel type d'alimentation réside dans le fait que celuici peut délivrer une tension pour l'alimentation des composants analogiques, à partir de la tension d'alimentation des composants digitaux tout en assurant une isolation électrique entre ces deux tensions d'alimentation.
Ce type. d'alimentation étant une alimentation à découpage donc une alimentation susceptible de générer des bruits , il est nécessaire de disposer aux entrées et aux sorties de ce type d'alimentation des organes de filtrage. De préférence ces organes sont constitués par des selfs (28).

Un des avantages de l'emploi des selfs réside dans le fait que celleci se comportent comme des fusibles et protègent l'alimentation DC/DC contre d'éventuelles hausses de courant.

Il est bien évident que suivant leur nature chaque carte pourra ^etre dotée d'un ou de deux blocs alimentations DC/DC (26).

On comprend que gr^ace aux aménagements précédemment décrits le controleur est particulièrement prémuni des parasites véhiculés soit par les lignes d'alimentation (L1) et (L2) ou soit des parasites générés par les organes de la machine.

Comme dit précédemment le controleur est également prémuni des fluctuations de la tension du réseau de distribution et plus précisément des micro-coupures et des baisses de cette tension.

Pour prémunir le contr^oleur des fluctuation de la tension d'alimentation, il est nécéssaire de placer l'unité centrale de traitement (1) dans une configuration de sécurité maximale avant que les effets de cette fluctuation n'interviennent aux niveau des différentes cartes du contr^oleur.

De plus conjointement à cette action, il est impératif d'assurer le verrouillage des bo^itiers mémoires vives (3).

Selon une forme préférentielle de réalisation les fluctuations de la tension du réseau d'alimentation qui altèrent comme on le conçoit la valeur de la tension délivrée par le bloc alimentation générale (14) du controleur sont détectées, non pas au niveau de ce bloc (14) mais en amont de celui-ci sur les lignes (L1) et (L2) en sorte que l'unité centrale de traitement (1) puisse ^etre placée dans une configuration de sécurité maximale avant de subir les effets de cette fluctuation.

Dans ce but, le contr^oleur est équipé d'un circuit (29) de détection des fluctuations de la tension du réseau de distribution et de délivrance d'un signal (sl) lorsque ces fluctuations sont détectées et d'un circuit (30) de remise à l'état initial de l'unité centrale (1).

Ce circuit (30) délivre un signal (S2) sur la broche (reset) de l'unité centrale (1) lorsque le signal (S1) est détecté.

Ce circuit est logé sur la carte unité centrale .

Lorsque la broche (reset) de l'unité centrale perçoit le signal (S2), l'unité centrale se place en configuration de sécurité maximale, c'est à-dire qu'elle réinitialise ses registres internes.

De plus le circuit (30) est doté d'un organe pour maintenir la présence du signal (S2) sur la broche (reset) après le retour du courant

pendant un temps long pour éviter tous aléas de fonctionnement dus à des micro-coupures successives.

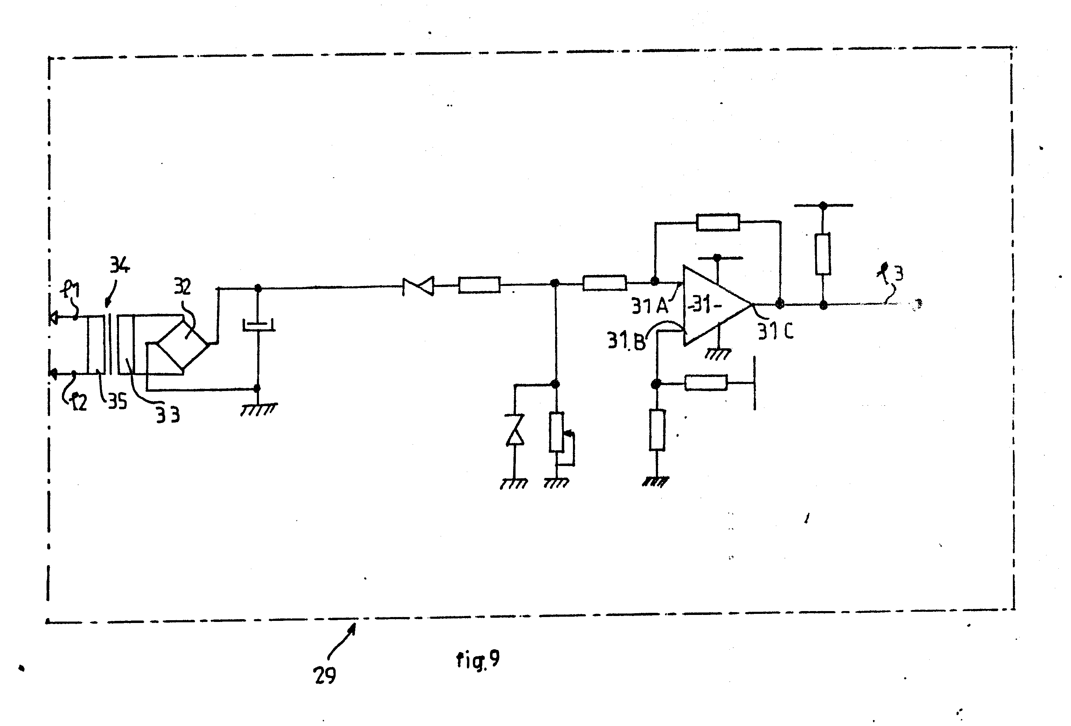

En figure 9 on a représenté le circuit de détection des micro-coupures.

Ce circuit est constitué par un comparateur (31) qui compare une tension continue de référence à une tension délivrée par un pont redresseur (32) alimenté par le secondaire (33) d'un transformateur (34) abaisseur de tension dont le primaire (35) est relié électriquement aux lignes (L1) et (L2) du réseau de distribution. La tension de référence est injectée dans le comparateur par la broche référencée (31B) et la tension délivrée par le pont redresseur est injectée dans ce comparateur par la broche référencée (31A).

Lorsque ce comparateur détecte une différence entre ces deux tensions cette différence étant due à une baisse de la tension du réseau de distribution ou a une micro coupure, il génère sur la broche référencée (31C) le signal (sl).

La tension de référence est soit délivrée par le bloc alimentation générale (14) du contr^oleur ou soit par une pile.

Le fait que la tension de référence soit délivrée par le bloc alimentation du contr^oleur n'est pas génant en soi du fait que les fluctuations de la tension du réseau sont sensibles au niveau du comparateur avant d'^etre sensible au niveau du bloc alimentation.

Ainsi lorsque le comparateur perçoit une baisse de la tension du réseau la tension de référence est encore présente sur sa borne correspondante et il peut donc générer le signal (S1).

De préférence le signal (sl) est injecté dans le circuit à logique programmable (23) de la carte unité centrale avant d'intervenir sur le circuit (30) de remise à l'état initial.

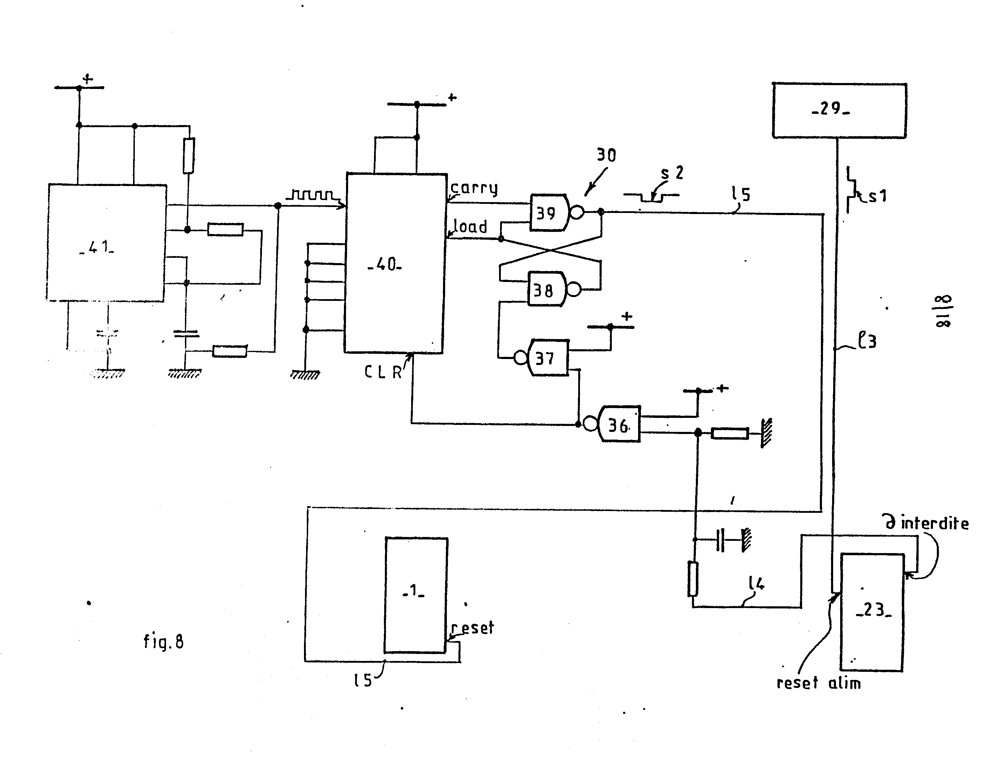

Comme on peut le voir en fig. 2 et 8, le signal sl est prélevé sur une des bornes d'entrée de la carte unité centrale et conduit par une ligne électrique (L3) à la broche référencée (reset alim) du reseau à logique programmable (23).

Ce signal (S1) se reporte sur une des broches de sortie de ce circuit à logique programmable, cette broche étant référencée (interdite).

De préférence en régime stationnaire, c'est-à-dire en l'absence de signal (sl) la broche ( interdite) du circuit à logique programmable (23) est maintenue à l'etat haut.

Lorsque le signal (sl) est présent sur la broche (reset alim) du circuit à logique programmable la broche (interdite) de ce cir-

18                                          0133840

cuit (23) est placée en l'état bas pendant toute la durée de présence de ce signal.

Cette broche (∂ interdite) est reliée électriquement par une ligne électrique (L4) au circuit de remise à l'état initial.

On comprend que ce circuit ne réagit en fait que lorsqu'il détecte un

état bas sur le broche (∂ interdite) du circuit à  logique  programmable.


Ce circuit (30) de remise à l'état initial est constitué par plusieurs porte "Non et" (36),(37),(38) et (39) pour générer le signal (s2) lorsque l'état bas est présent sur la broche (∂ interdite)  et  par  un  compteur  (40) piloté par une horloge (41) pour maintenir le signal (s2), pendant un temps prédéterminé,  sur  la broche (reset) de l'unité centrale de traitement (1).


De préférence en régime stationnaire la broche (reset) de l'unité centrale (1) est maintenue dans un état haut.

Le signal (s2) consiste à générer un état bas sur cette broche.


Il est nécessaire que le circuit (30) de remise à l'état  initial de  l'unité centrale (1) ne soit pas affecté par les fluctuations de la tension délivrée par le bloc alimentation  du  contr^oleur,

mais  demeure constamment alimenté par une tension constante pour éviter tous aléas de fonctionnement.


A cet effet, ce circuit est alimenté  par  une  source  d'énergie annexe.

De préférence cette source d'énergie annexe  est  constituée  par une  pile  (42)  et non par une batterie en raison du fait qu'une pile présente une décharge abrupte dans le temps contrairement à une batterie qui présente une décharge progressive.

Hors on sait que les composants utilisés dans un contr^oleur du type selon l'invention et plus généralement dans tous systèmes informatiques ne fonctionnent que sous deux niveaux de tension, un niveau haut et un niveau bas et ne peuvent en aucun cas fonctionner sous un niveau intermédiaire à ces deux niveaux.

Donc on comprend que l'utilisation d'une batterie conduirait à plus ou moins brève échéance à faire fonctionner le circuit (30) de remise à l'état initial sous un niveau de tension non défini.

On comprend également que ce problème est résolu par l'emploi d'une pile.

Pour augmenter la durée de vie de la pile (42) il est nécessaire que celle-ci alimente le circuit (30) de remise à l'état initial que lorsqu'une baisse de tension ou une micro coupure intervient au niveau du bloc alimentation générale (14) du contr^oleur et donc au niveau du bloc alimentation (43) de la carte unité centrale.

Comme on peut le voir en fig.2 et 13 la tension d'alimentation sous 5 volts de la carte unité centrale est délivrée par une porte (44) dont les deux entrées sont respectivement raccordées à la sortie du bloc alimentation (43) de la carte et à la borne positive de la pile (42).

Cette porte est constituée par deux diodes (45) et (46) au germanium.

Une de ces deux diodes la diode (45) est reliée par son anode à la borne positive de la pile (42) tandis que l'autre, la diode (46) est reliée par son anode à la sortie du bloc alimentation (43) de la carte unité centrale.

Ces deux diodes (45) et (46) sont reliées entre elles par leur cathode.

La tension d'alimentation sous 5 volts de la carte unité centrale est prélevée à la cathode des diodes.

Le fonctionnement de la porte ainsi décrite est le suivant :

Lorsque le bloc alimentation (43) de l'unité centrale délivre une tension la diode (46) associée à ce bloc est rendue passante .

A ce stade le circuit de remise à l'état initial est alimenté par le bloc alimentation.

Par contre la diode (45) associée à la pile (42) est polarisée par une tension inverse et par conséquent est bloquée.

Donc la pile ne débite aucun courant.

Par contre, lorsque la tension du bloc d'alimentation (43) de la carte unité centrale est nulle, la diode (45) associée à la pile (42) est rendue passante et cette pile (42) peut alimenter le circuit (30) de remise à l'état initial.

La diode (46) associée au bloc alimentation (43) de la carte unité centrale est polarisée en inverse et est donc bloquée, ce qui évite tout débit de la pile (42) dans ce bloc alimentation.

On comprend aisément que lorsqu'une baisse ou une coupure de la tension d'alimentation délivrée par le bloc alimentation se produit, la pile (42) assure immédiatement le relais.

En se référant maintenant à la fig.8, on va décrire dans le détail le circuit de remise à l'état initial.

Comme on peut le voir sur cette figure, la ligne L4 est reliée à une des deux entrées de la premiere porte "Non et" (36).

La seconde entrée de cette première porte "Non et" est maintenue en état haut.

La sortie de cette première porte "Non et" est reliée électriquement à la broche (CLR) du compteur (40) et à une des deux entrées de la deuxième porte "Non et" (37).

La seconde entrée de cette deuxième porte "Non et" est maintenue en état haut en lui appliquant la tension d'alimentation.

La sortie de cette deuxième porte "Non et" (37) est reliée à une des entrées de la troisième porte "Non et" (38) dont la seconde entrée est reliée à la sortie de la quatrième porte "Non et" 39.

La sortie de la troisième porte "Non et" (38) est reliée à la broche (load) du compteur (40) et à une des entrées de la quatrième porte "Non et" (39).

La seconde entrée de cette quatrième porte "Non et" (39) est reliée à la broche (carry) du compteur (40) et la sortie de cette quatrième porte

"Non et" et reliée à une des entrées de la troisième porte "Non et" (38) et par une ligne électrique (L5) à la broche (reset) de l'unité centrale (1).

Le signal (s2) lorsqu'il est généré est délivré par la sortie de la quatrième porte "Non et" (39) et est véhiculé par la ligne (L5) à la broche (reset) de l'unité centrale.

Le compteur (40) du circuit (30) est de préférence un compteur par 16. La broche (carry) de ce compteur (40) est normalement maintenue à l'état haut et dès la seizième impulsion comptée cette broche (carry) passe à l'état bas.

Les impulsions que compte le compteur sont délivrées par l'horloge (41).

Ce compteur (40) ne peut compter que lorsque sa broche (load) est en état haut. Le compteur (40) est initialisé en plaçant sa broche (CLR) en état haut. Cette broche est la broche d'initialisation.

On va maintenant expliquer le fonctionnement du circuit (30) de
remise à l'état initial.

En régime stationnaire, les deux entrées de la première porte
"Non et" (36) sont maintenues en état haut.


De ce fait la broche (CLR) du compteur est maintenue en état bas.

Egalement en régime stationnaire la sortie de la quatrième porte
"Non et" (39) reliée à cette sortie et l'entrée de la troisième
porte "Non et" (38) reliée à cette sortie sont à l'état haut.

De plus, comme l'entrée de la troisième porte "Non et" (38) est
maintenue à l'état haut la sortie de cette troisième porte est
dans un état bas ainsi que la broche (Load) de ce compteur.

De ce fait celui-ci ne tient pas compte des impulsions délivrée
par l'horloge.

Lorsque la broche(α interdite), du circuit à logique programmable
(23) est en état bas, cet état bas étant la traduction d'une micro coupure ou d'une baisse de tension du réseau de distribution,
la sortie de la première porte "non et" (36) passe en état haut
ce qui dans un premier temps initialise le compteur et dans un
second temps, place la sortie de la quatrième porte "non et" 39
en état bas.

A ce stade le signal s2 est généré et l'unité centrale (1) est
placée en configuration de sécurité maximale.


De plus, à ce stade, la broche (load) du compteur (40) est placée
en état haut.

Ainsi dès le retour du courant, le compteur pourra compter les
impulsions de l'horloge (41) et à la seizième impulsion comptée
sa broche (carry) passe en état bas, ce qui interrompt le signal
(s2).

On comprend que dès qu'une micro-coupure ou une baisse de la tension d'alimentation sont détectées sur les lignes (L1) et (L2), l'unité centrale est placée dans une configuration de sécurité maximale par le circuit (30) de remise à l'état initial avant que la micro-coupure ou la baisse de tension ne produise ses effets au niveau de la carte unité centrale.

De plus on comprend aisément que l'unité centrale (1) est maintenue en état de sécurité maximale pendant un temps prédéterminé, après le retour du courant.

Ce temps de maitien est bien entendu fonction de la fréquence des impulsions délivrées par l'horloge (41) et du nombre d'impulsions à compter pour placer la broche (carry) du compteur (40) en état bas.

A titre d'exemple la fréquence de l'horloge est de 50HZ.

Ainsi l'unité centrale est maintenue en état de configuration maximale pendant 320 ms à partir du retour du courant.

Comme dit précédemment lorsque l'unité centrale de traitement (1) est placée en configuration de sécurité maximale, il est impératif de verrouiller les mémoire vives (3) du contrôleur.

A cet effet, le signal (s2) est propagé vers la carte mémoire et appliqué sur l'entrée de verrouillage (CE2) des mémoires vives via une ligne électrique (L6) et une porte "NAND" (47).

De plus, lors d'une coupure de tension il est nécessaire de sauvegarder les données stockées dans les mémoires vives.

A cet effet, la tension d'alimentation des mémoires vives est prélevée à la sortie d'une porte (48) constituée de deux diodes (49) et (50) associées respectivement à une pile (51) et au bloc alimentation (52) de la carte de la même manière que précédem-

ment décrit.

Lorsqu'une coupure du courant intervient, il est nécessaire de connaître la durée de cette coupure.

En fonction de cette durée le contrôoleur en interrogeant le logiciel pourra décider de la procédure à suivre.

A cet effet, le controleur est équipé de deux bases de temps (53) et (54) dont une délivre un temps machine et dont l'autre délivre un temps réel.

La première base de temps est constituée par un temporisateur programmable (53) logé sur la carte unité centrale.

Un tel temporisateur programmable est connu sous le terme de timer.

Ce temporisateur programmable (53) est relié au bus données (1C), au bus adresse (1A) et au bus commande (1B) du contrôoleur et reçoit par une ligne électrique le signal horloge de l'unité centrale.

De plus le temporisateur programmable est initialisé par le signal (s2) délivré par le circuit de remise à l'état initial.

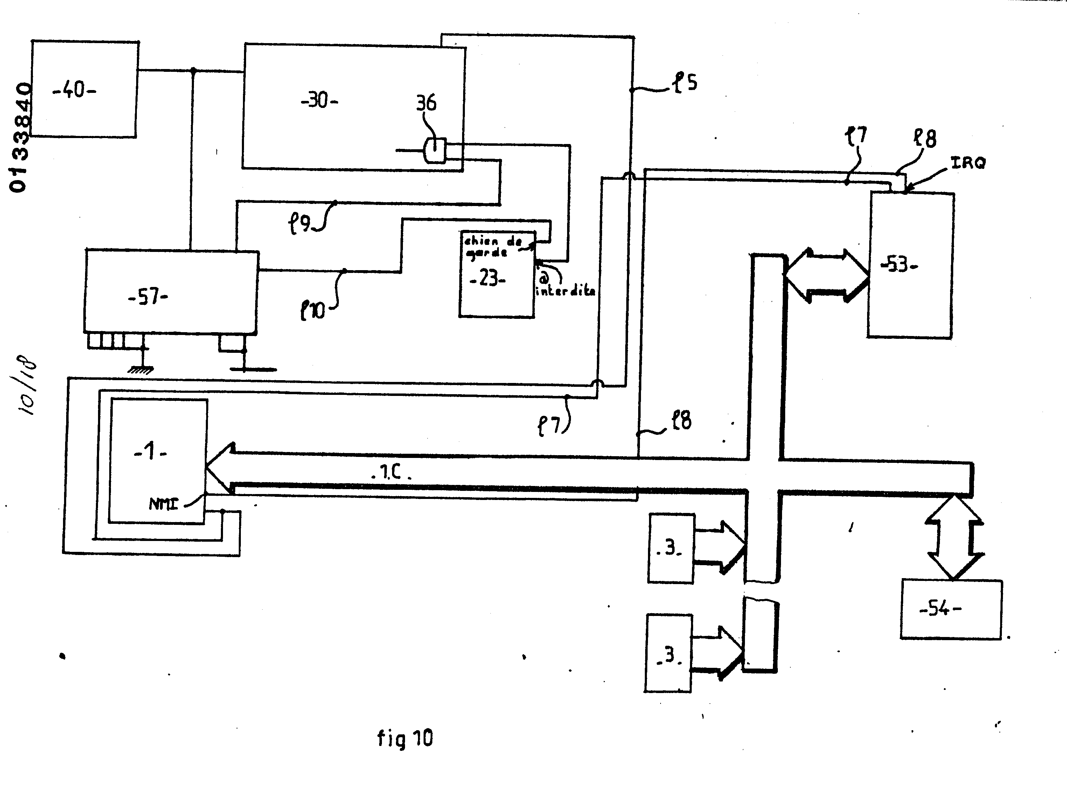

Comme on peut le voir en fig. 2 et 10 le temporisateur programmable (53) est sélectionné par l'intermédiaire du circuit à logique programmable (23) de la carte unité centrale.

Ce temporisateur programmable (53) reçoit la tension délivrée par le bloc alimentation générale (14) du contrôoleur.

La seconde base de temps du contrôoleur est constituée par une horloge horodateur (54) temps réel qui donne la date et l'heure.

Cette horloge (54) est logée sur la carte mémoire vive et est alimentée par la tension délivrée par la porte (48).

Ainsi lors d'une coupure de courant cette horloge est alimentée par la pile (51).

L'horloge horodateur (54) comme on peut le voir en figure 3 est pilotée par un quartz (55) délivrant une fréquence de 33,76 KHZ.

La fréquence du quartz a été choisie volontairement faible pour diminuer la consommation de courant.

Pour éviter tous aléas de fonctionnement du quartz, celui-ci est associé à un circuit d'amortissement (56) constitué par deux résistances.

Le temporisateur programmable (53) est programmé en sorte de générer périodiquement des signaux d'interruption.

Ces signaux d'interruption sont prélevés à la broche (IRQ) du temporisateur programmable (53) et véhiculés par une ligne (L8) vers l'entrée interruption non mascable (NMI) de l'unité centrale.

Lorsque l'unité centrale de traitement reçoit le signal d'interruption elle interrompt la procédure en cours pour traiter le programme d'interruption stocké dans les mémoires mortes (2).

Au cours de cette séquence d'interruption, le temps délivré par le temporisateur programmable (53) et le temps réel par l'horloge (54) sont lus et stockés dans les mémoires vives (3).

Ainsi à chaque temps machine, correspond un temps réel.

Lorsqu'une coupure du courant véhiculé par le réseau de distribution est détectée, le temporisateur programmable (53) est initialisé par le signal (s2). Lorsque la coupure est effective au niveau de la carte unité centrale le temporisateur programmable (53) cesse de générer un temps machine. Par contre l'horloge temps réel (54) étant insensibilisée aux effets de cette coupure continue à délivrer un temps réel.

Après le retour du courant, est amorcée une nouvelle séquence interruption.

Lors de la séquence lecture du temps machine et du temps réel le contrôleur peut déterminer la durée de la coupure et en fonction de cette durée engager la procédure prévue.

Au niveau de la séquence interruption, le programme de traitement des interruptions vérifie le fonctionnement de l'unité centrale (1).

Si le fonctionnement est incorrect l'unité centrale est placée dans une configuration de sécurité maximale par le circuit (30) de remise à l'état initial.

Dans ce but ,ce circuit est associé à un circuit dénommé par l'homme de métier "chien de garde". Ce circuit est constitué par le circuit à logique programmable (23) de la carte unité centrale, par un compteur par 16 (57) et par l'horloge (41) du circuit (30) de remise à l'état initial.

Ce compteur (57) va générer dés la seizième impulsion un état bas sur sa broche référencée (carry).

La broche de ce compteur (57) est reliée par une ligne électrique (19) à une des deux entrées de la première porte Non et (36) du circuit (30) de remise à l'état initial.

Ce compteur (57) reçoit les impulsions de l'horloge (41) et ne compte celles-ci que si sa broche (load) est maintenue en état haut.

Cette broche est reliée par une ligne électrique (110) à une broche de sortie référencée (chien de garde) du circuit à logique programmable (23).

Ce compteur (57) est en outre cablé de manière à ce qu'il soit initialisé, c'est à dire remis à zéro lorsque un état bas est appliqué sur sa broche (load).

En régime stationnaire la broche (load) du compteur est porté en état haut et le compteur compte les impulsions d'horloge.

Si le comptage de ce compteur n'est pas interrompu avant la seizième impulsion reçue, c'est à dire avant qu'un temps de 320 ms ne se soit écoulé, un état bas est généré sur la broche (carry). Cet état bas est détecté par le circuit (30) de remise à l'état initial qui génère le signal s2.

Au niveau de la séquence traitement de l'interruption,cette interruption étant génèrée par le temporisateur programmable (53), l'unité centrale (1), si son fonctionnement est correct, doit interrompre le comptage du compteur (57) en portant la broche (load) du dit compteur à l'état bas.

A cet effet, l'unité centrale doit sélectionner le circuit à logique programmable (23) et porter certaines des entrées de ce circuit en état haut ou bas suivant une combinaison pré-établie.

Lorsque le circuit à logique programmable (23) reconnait cette combinaison , il porte sa broche (chien de garde) en état bas.

Ainsi le compteur (57) est remis à zéro et une nouvelle séquence de comptage est entreprise jusqu'à une nouvelle interruption.

Il est bien évident qu'entre deux signaux d'interruptions générés par le temporisateur programmable (53) s'écoule un temps inférieur à 320 ms.

A titre d'exemple, le temporisateur programmable (53) génère un signal d'interruption chaque 50 ms.

On conçoit aisément que si l'unité centrale est perdue ou bloquée, par des bruits industriels, celle-ci sera remise automatiquement en état de configuration de sécurité maximale.

On conçoit également que le circuit "chien de garde" tel que décrit assure également la surveillance du fonctionnement du temporisateur programmable (53).

En effet, si celui-ci ne génère plus les signaux d'interruption, l'unité centrale ne pourra se dérouter en séquence de traitement de l'interruption et sera remise en configuration de sécurité maximale.

La surveillance du fonctionnement de l'unité centrale est complètée par l'analyse des données véhiculées sur le bus adresses et sur le bus commandes.

Cette unité sera remise en configuration de sécurité maximale si une erreur est détectée , la cause de cette erreur étant due toujours à des bruits industriels.

Selon la forme préférentielle de réalisation, le circuit à logique programmable (23) est programmé en sorte de générer un état bas sur sa broche (  interdite) lorsqu'il détecte sur le bus adresses (1A) l'adresse d'une mémoire morte et simultanément sur le bus commandes (1B) un signal d'écriture.

Pour améliorer encore la fiabilité du fonctionnement d'un tel controleur face à des bruits industriels, il a été créé dans l'espace mémoire de celui-ci une zone vierge, c'est-à-dire des adresses qui ne reçoivent aucune affectation et ce dit controleur est équipé d'un moyen qui surveille le bus adresse et qui commande le circuit (30) de remise à l'état initial lorsqu'il détecte ces adresses vierges.

Ce moyen est de préférence constitué par le circuit à logique programmable (23) de la carte unité centrale.

Dans ce but, ce circuit est également programmé pour générer un état

bas sur sa broche (Ø interdite) lorsque ses bornes d'entrées, recevant le bus adresses, sont placées en état haut ou bas suivant une combinaison correspondant à une des adresses vierges.


Pour accroitre encore la fiabilité du controleur chaque module entrées/sorties est équipé de moyens pour vérifier le fonctionnement de certains de ses composants par lesquels transitent les informations véhiculées par le bus données (1C), ces informations pouvant ^etre véhiculées de l'unité centrale de traitement (1) vers les organes de la machine ou de ces organes vers l'unité centrale.

Ces moyens vérifient de préférence le fonctionnement des amplificateurs tampon (22) disposés sur le bus données (1C) de chaque module entrées/sorties.

Ces moyens sont constitués par le circuit à logique programmable du module entrées/sorties et par au moins un organe (58) de lecture des informations véhiculées par le bus données (1C) et reçues ou délivrées par le ou les amplificateurs tampons (22).

L'unité centrale par sélection de ces organes par l'intermédiaire du réseau à logique programmable, lit les informations qu'elle reçoit de cet ou ces organes (58) et les compare à celles reçues ou délivrées par les amplificateurs tampons (22).


Avantageusement, chaque module entrées/sorties comporte autant d'organes (58) que d'amplificateurs tampons (22) et chaque organe de lecture est associé à un amplificateur tampon (22), c'est à dire qu'il reçoit les informations reçues ou délivrées par l'amplificateur tampon (22) auquel il est associé.

Pour recevoir ou émettre des informations par le bus données, l'unité centrale sélectionne l'amplificateur tampon (22).

Dans un second temps par l'intermédiaire du circuit à logique programmable, l'unité centrale sélectionne l'organe (58) correspondant à cet amplificateur tampon (22) et compare les informations qu'elle reçoit de cet organe à celles délivrées ou reçues par le dit amplificateur tampon (22).

Avantageusement, l'organe (58) délivre les informations qu'il reçoit du bus données 1C en complémenté.

De cette façon, l'unité centrale est apte à déterminer si l'organe (58) délivre bien des informations lorsque celui-ci est sélectionné.

Si le fonctionnement des amplificateurs tampons ainsi que des organes (58) est correct, l'unité centrale doit recevoir le complément des informations reçues ou délivrées par les dits amplificateurs tampons lorsqu'elle lit les informations délivrées par les organes (58).

Par l'intermédiaire de tels moyens de détection est vérifié le fonctionnement des mémoires tampons (59) connues de l'homme de métier sous le nom de "latches".

A cet effet, comme on peut le voir en figures 5 et 7, les organes (58) reçoivent les informations délivrées par les mémoires tampons, celles-ci recevant leurs informations du ou des amplificateurs tampons (22).

De préférence, les organes (58) sont constitués par des amplifi-

cateurs tampons.

En se referant maintenant aux figures 4 et 7, on va décrire les modules entrées/sorties.

La figure 4 montre le module entreées/sorties (4) dénommé carte entrées analogiques.

Ce module a pour but de convertir en valeur digitale les données analogiques qu'il reçoit en sorte que celles-ci puissent ^etre exploitées par l'unité centrale de traitement (1).

On peut voir que ce module comporte un convertisseur analogique digital (60) disposé dans la zone analogique (27B) du support de circuit imprimé (27).

De préférence, ce convertisseur (60) est du type de ceux assurant une conversion analogique digitale sur 12 bits et comportant seize entrées analogiques (69) qui reçoivent des tensions électriques représentatives par exemple de la valeur de paramètres physiques mesurés au cours du processus industriel.

De préférence, chaque entrée comporte un filtre pour filtrer la tension électrique qu'elle reçoit, en sorte d'éviter que les bruits industriels par exemple des parasites générés par les organes de la machine ne se répercutent tout d'abord sur le convertisseur (60) et sur les composants digitaux de la carte.

Chaque filtre est constitué par une résistance (62) en série avec l'entrée (61) correspondante et par un condensateur (63) branché entre l'entrée (61) et la masse de la carte.

De plus, chaque entrée (61) est reliée à la masse par une résistance (64) pour fixer le potentiel de la dite entrée dans le cas où celle-ci n'est connectée avec aucun des composants du controleur.

Le convertisseur (60) comporte douze sorties (65) sur l'ensemble desquelles est prélevé le résultat de la conversion d'une valeur analogique présente à une des entrées (61).

Ces sorties (65) sont raccordées au bus données (1C) de la carte par l'intermédiaire des optos coupleurs (25).

De préférence, entre les optos coupleurs (25) et les sorties (65) du convertisseur est disposé un réseau (65A) de résistances.

Chaque résistance est disposée en série avec une sortie (65) et un opto coupleur (25).

Ce controleur comporte également quatre entrées (66) recevant les signaux de sélection d'une des entrées (61), ces signaux de sélection étant délivrés par l'unité centrale de traitement (1).

De préférence, ces signaux de sélection sont véhiculés par quatre lignes (111,112,113,114) du bus données (1C) et sont appliquées aux quatre entrées (66) du convertisseur par l'intermédiaire de trois optos coupleurs.

Pour maintenir présent les signaux de sélection pendant toute la procédure de conversion, une mémoire tampon (68) est disposée sur les lignes (111), (112), (113), (114) du bus données (1C) dans la zone digitale (27A) de la carte.

Cette mémoire tampon est sélectionnée par le circuit à logique programmable (23).

Ce circuit est logé dans la zone 27A de la carte.

Pour engager la procédure de conversion, le convertisseur (60) doit recevoir un signal début conversion.

Ce signal est appliqué sur l'entrée référencée (strobe) de ce

convertisseur.

Ce signal est délivré par le circuit à logique programmable (23).
Ce circuit étant disposé dans la zone digitale de la carte, le signal de début de conversion transite par un opto coupleur (25).

De préférence, un registre à décalage (69) est interposé entre cet opto coupleur et le circuit à logique programmable, sur le trajet du signal début de conversion.

Ce registre à décalage a pour but d'accroitre la durée de ce signal en sorte que celui-ci soit correctement transmit au convertisseur par l'opto coupleur (25).

Cette carte comme on peut le voir en figure 4 est équipée de deux amplificateurs tampons (22) et de deux organes (58) pour la relecture des données digitales délivrées par le convertisseur.

Entre les optos coupleurs (25) et les amplificateurs tampons (22) le bus donnée (1C) est associé à deux réseaux de résistance (70).

Chaque résistance est branchée entre une des lignes éléctriques du bus (1C) et une source de potentiel.

En figure 5 est représenté le module entrées/sorties (5) dénommé carte sorties analogiques.

Ce module (5) a pour but de convertir les données digitales délivrées par l'unité centrale (1) en données analogiques.

Selon l'exemple de réalisation représenté en figure 5, le module comporte huit sorties analogiques et donc comporte huit convertisseurs numériques analogiques (71).

Ces convertisseurs (71) sont associés chacun à un amplificateur opérationnel (72) pour convertir le courant qu'ils délivrent en tension électrique.

La sortie de cet amplificateur constitue une des sorties du module entrée/sortie (5).


La sélection d'une des sorties d'un module est opéré  par  sélection du convertisseur (71) correspondant.

A cet effet, l'unité centrale de traitement applique un signal de sélection sur la broche (cs) de  ce convertisseur.

De préférence, pour sélectionner un des  convertisseurs,  l'unité centrale de traitement (1) est relayée par un organe de sélection (73).

Cet organe de sélection est logé dans la zone  analogique  de  la carte  et  reçoit de l'unité centrale les ordres de sélection par l'intermédiaire d'optos coupleurs (25).


Cet organe de sélection comporte huit sorties (74) associées chacune à la broche (cs) d'un convertisseur (71)  et  trois  entrées (75)  en  relation  avec l'unité centrale par l'intermédiaire des trois optos coupleurs (25).

Suivant la configuration de ses entrées (75), l'organe de  sélection  adresse  une de ses sorties et donc sélectionne un des convertisseurs (71).

Les trois optos coupleurs (25) associés à l'organe  de  sélection (73) sont reliés de préférence au bus données (1C).


De préférence, les informations relatives à la sélection d'un des convertisseurs sont mémorisées dans une mémoire tampon  ou  latch (76).

Cette mémoire tampon (76) est disposé dans la zone digitale de la carte et est associé au bus donnée (1C) et aux trois optos  coupleurs (25). De préférence, cette mémoire tampon (76) est raccordé

au bus données (1C) à la sortie de l'amplificateur tampon (22).

Cette mémoire tampon reçoit du circuit à logique programmable (23) un signal de sélection.

Les données analogiques à convertir sont véhiculées sur le bus données (1C) et sont appliquées aux entrées (75) du convertisseur par l'intermédiaire des optos coupleurs (25).

Pour assurer la conversion, les convertisseurs (71) outre le signal de sélection doivent recevoir un signal d'écriture appliqué sur leur broche référencée (W).

Ce signal d'écriture est délivré par le circuit à logique programmable (23) par l'intermédiaire d'un opto coupleur (25).

Pour accroitre la durée de ce signal, un registre à décalage (77) est disposé dans la zone digitale de la carte, sur le trajet du dit signal.

Cette carte est de plus dotée d'une mémoire tampon ou latch (59).

Cette mémoire tampon est disposé dans la zone digitale de la carte, sur le bus donnée, et permet la mémorisation des données digitales à convertir.

Comme on peut le voir, cette mémoire tampon (59) est disposé sur le bus donnée entre l'amplificateur tampon (22) et les optos coupleurs.

On peut voir également que l'organe (58) équipant cette carte lit les informations délivrées par cette mémoire tampon (59).

La carte telle que décrite est également équipée de réseau de résistances (78) et (79).

Les réseaux (78) sont disposés dans la zone digitale de la carte.

Un des réseaux (78) est disposé sur le bus donnée (1C) entre la mémoire tampon (59) et les optos coupleurs (25).

L'autre réseau (78) est disposé entre la mémoire tampon (76) et les optos coupleurs (25).

Chaque résistance de chaque réseau (78) est disposé en série entre la mémoire tampon correspondante et l'opto coupleur.

Le réseau 79 est disposé dans la zone analogique (27B) de la carte.

Chaque résistance de ce réseau est connectée à une des entrées (75) de l'organe de sélection (73) et à une source de potentiel.

En figure 6, est représenté le module entrées/sorties dénommé carte entrées numériques.

Le but de ce module est d'effectuer l'acquisition d'une ou plusieurs entrées "tout ou rien".

Par exemple, cette carte peut ^etre associée à des vannes, à des relais ou autres organes et indique à l'unité centrale de traitement (1) l'état logique, haut ou bas, de ces différents organes.

Selon l'exemple de réalisation, le module entrées/sorties (6) comporte vingt quatre entrées numériques.

Ces entrées numériques sont reliées au bus données (1C) par l'intermédiaire des optos coupleurs (25).

La partie analogique (27B) de la carte comporte une ou plusieurs lignes électriques (115) à laquelle ou auxquelles sont raccordées les anodes des diodes des optos coupleurs (25).

Entre ces lignes électriques (115) et les diodes des optos coupleurs correspondant sont disposés des diodes (80) de protection.

La diode de chaque opto coupleur est polarisée par une résistance (81) qui limite le courant dans le dit opto coupleur.

De préférence, un condensateur de filtrage (82) est disposé entre

**0133840**

la ligne (115) et la cathode des diodes de chaque opto coupleur.

La partie digitale (27A) de la carte est équipée de réseaux de résistance pour polariser les transistors des optos coupleurs.

Entre les optos coupleurs et les amplificateurs tampons (22) sur le bus données (1C), cette carte comporte des circuits anti-rebonds (83) connus en soi.

De préférence, ces circuits sont du type "MC 14490 VP".

Les circuits anti-rebonds délivrent les informations qu'ils reçoivent aux amplificateurs tampons (22) de la carte ainsi qu'aux organes (58) associés aux dits amplificateurs tampons comme décrit précédemment.

En figure 7 est représenté le module entrées/sorties (7) denommé carte sorties numériques.

Ce module en fonction des informations délivrées par l'unité centrale

(1) et véhiculées par le bus (1c) commute en "tout ou rien" les organes de la machine reliés à ses à sorties (84).

Selon l'exemple de réalisation représenté en figure 7, le module comporte vingt quatre sorties (84).

Dans la zone digitale (27A), ce module comporte trois mémoires tampons (7A) sélectionnés par le circuit à logique programmé (23).

Ces mémoires tampons sont reliés au bus données (1C) et mémorisent les informations que ce bus véhicule.

Les sorties des mémoires tampons (7A) sont chacune reliées à un opto coupleur (25).

Dans la partie analogique (27B) du module, les optos coupleurs sont couplés à des boitiers (85) intégrant des "Darlington" de transistors.

Les collecteurs de ces transistors constituent les sorties (84).

Les émetteurs des transistors des optos coupleurs sont polarisés par des réseaux (86) de résistance et attaquent chacun la base d'un transistor intégré dans le boitier (85).

Les collecteurs des transistors des optos coupleurs sont reliés chacun à un collecteur d'un transistor logé dans le boitier (85).

Pour limiter le courant dans chaque transistor intégré dans le boitier (85), une résistance (87) est montée en série avec leur collecteur.

Le module (7) tel que décrit comporte également des organes (58) associés chacun à une mémoire tampon (7A) et des réseaux (88) de résistance de polarisation des diodes des optos coupleurs (25).

Par l'intermédiaire des modules entrées/sorties tels que décrits, l'unité centrale de traitement (1) peut commander divers organes d'une machine fonctionnant de manière analogique ou fonctionnant en tout ou rien et peut procéder à l'acquisition de données numériques ou analogiques.

Pour procéder à l'acquisition de données analogiques, il peut s'avérer nécessaire de procéder au préalable à leur amplification en sorte que la conversion de celles-ci en données digitales puisse être effectuée.

Dans ce but, le controleur est équipé d'un module (89) d'acquisition et d'amplification des données analogiques.

Ces données sont par exemple représentatives de la valeur de paramètres physiques à controler dans le cadre du processus industriel.

Par exemple, les paramètres physiques à controler sont des températures régnant dans un four à diffusion, ce four à diffusion étant par exemple mis en oeuvre dans le cadre d'un processus de fabrication de puces de circuits intégrés.

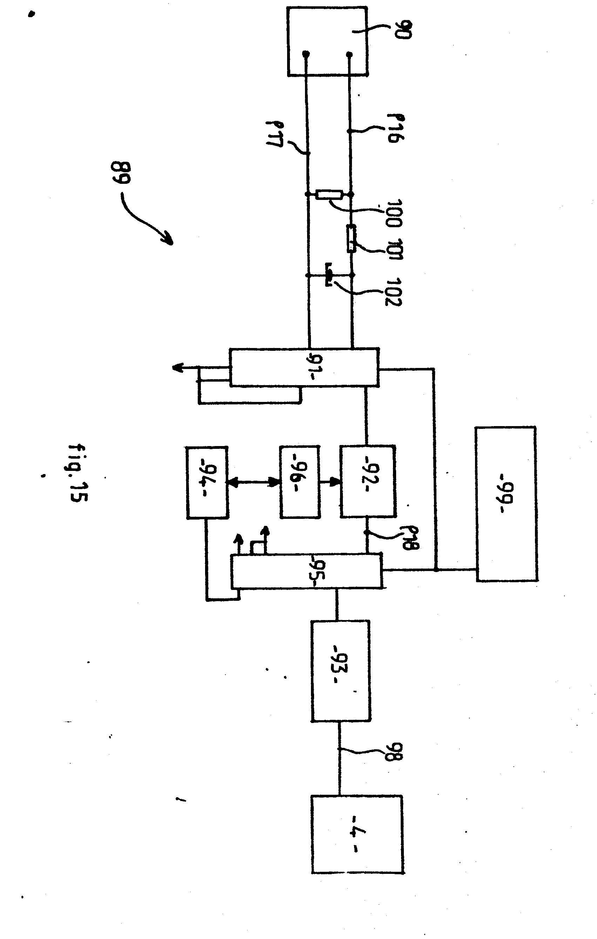

Tel que représenté en figure 15, le module d'acquisition et d'amplification (89) comporte au moins une voie d'entrée reliée électriquement à une sonde de température ou thermo couple (90).- Le module (89) prélève sur cette voie d'entrée la force électro motrice générée par le thermo couple (90) ainsi que la tension de dérive ou tension d'offset.

Ce thermo couple est de préférence un thermo couple du type "S" et délivre une force électro motrice de 10 micro volts par degrés centigrades.

Sur la figure 15, la voie d'entrée est figurée par deux lignes (116) et (117).

Ces deux lignes sont des lignes électriques et sont connectées chacune à une des bornes du thermo-couple (90).

Sur la ligne (116) est prélevée la force électro-motrice du thermo couple.

La ligne (117) est reliée à une source de potentiel constituée de préférence par la masse du module d'amplification (89).

Sur cette ligne est prélevée la tension d'offset ou tension de dérive, produite par des bruits ou due aux connections des masses.

Le module d'amplification (89) comporte un organe (91) pour sélectionner successivement la ligne (116) et la ligne (117), un étage (92) d'amplification à grand gain pour amplifier d'une manière rapide, soit la force électro-motrice ou soit la tension de dérive suivant la ligne (116) ou (117) sélectionnée, au moins deux mémoires analogiques (93) et (94) pour le stockage de la force électro-motrice amplifiée ou pour le stockage de la tension de dérive amplifiée, au moins un organe de démultiplexage (95) placé entre les mémoires analogiques et la sortie de l'étage d'amplification (92), assurant la commutation de la sortie du dit étage avec une mémoire analogique suivant la ligne sélectionnée par l'organe (91), au moins un étage (96) de compensation de la tension de dérive par modification du courant de polarisation de l'étage (92) en fonction de la valeur de la tension de dérive mémorisée dans la mémoire (94) et par au moins un canal (98) pour transférer la donnée analogique stockée dans la mémoire (93) vers une des entrées de la carte entrées analogiques(4).

Les organes (91) et (95) reçoivent d'un circuit base de temps (99) un m^eme signal.
Ce circuit base de temps est monté sur le support (27) du module (89).

Lorsque les organes (91) et (95) reçoivent le signal du circuit base de temps (99), ceux-ci procèdent à une nouvelle sélection ou à une nouvelle commutation.

Les organes (91) et (95) sont agencés en sorte que lorsque le dit organe (91) sélectionne la ligne (116), le dit organe (95) commute l'étage d'amplification (92) avec la mémoire (93) et en sorte que lorsque le dit organe (91) sélectionne la ligne (117), le dit organe (95) commute la sortie de l'étage (92) avec la mémoire (94).

Ainsi dans la mémoire (93) sera toujours stockée la force électro-motrice amplifiée et dans la mémoire (94) sera toujours stockée la tension de dérive amplifiée.

On conçoit aisément que ce module permet une acquisition rapide des données analogiques et compense d'une acquisition à l'autre, la tension de dérive.

De plus, grace à la présence de mémoire analogique (93) pour le stockage de la force électro-motrice amplifiée le module réalise le filtrage de cette donnée analogique sans que la rapidité d'acquisition de celle-ci par l'unité centrale en soit altérée.

De préférence, l'organe (91) et l'organe (95) sont respectivement un multiplexeur et un démultiplexeur de technologie CMOS en sorte de ne générer aucun bruit.

Les deux organes (91) et (95) ne sont pas initialement prévus pour recevoir sur chacune de leurs entrées des tensions analogiques de l'ordre de la dizaine de micro volts ou de l'ordre de la dizaine de milli volts.

Notamment, se pose le problème du blocage de ceux ci.

Pour pallier à cet inconvénient,les deux organes 91 et 95 sont alimentés chacun par une tension négative de 1,5 volts et par une tension positive de 4 volts.

Pour améliorer encore les caractéristiques du module amplification (89), un filtre est disposé sur son entrée, c'est-à-dire sur les lignes (116) et (117).

Comme on peut le voir en figure 15, ce filtre est constitué par une première résistance (100) branchée en parallèle sur les lignes (116) et (117), par une seconde résistance (101) branchée en série sur la ligne (116) et par un condensateur polarisé (102) branché en parallèle sur les lignes (116) et (117).

L'étage d'amplification (92), comme on peut le voir en fig(18), est constitué par un amplificateur opérationnel (103) dont l'entrée non inverseuse reçoit de la sortie du multiplexeur (91) la force électro-motrice à amplifier ou la tension de dérive à amplifier.

La sortie de l'amplificateur (103) est reliée à l'entrée du démultiplexeur (95) par une ligne électrique (118) sur laquelle est disposée une résistance (104).

Une diode (105) est connectée avec la sortie de la résistance (104) et avec la masse.

Cette diode polarisée en inverse devient passante lorsqu'une tension négative est présente à la sortie de la résistance (104).

Ainsi l'organe (95) ne peut recevoir de tensions négatives nuisible à son fonctionnement.

La portion de la ligne (118) entre la diode (105) et l'entrée de l'organe (95) est reliée à l'entrée inverseuse de l'amplificateur opérationnel par l'intermédiaire d'une résistance (106).

De plus, cette portion de ligne (118) est reliée à la masse par une diode (107) qui limite la tension à l'entrée de l'organe (95).

De préférence, cette diode (107) est une diode électro luminiscente en sorte que l'utilisateur puisse détecter visuellement toute saturation.

L'entrée inverseuse de l'amplificateur (103) reçoit une tension de polarisation délivrée par le circuit de compensation de la tension de dérive.

Ce circuit par référence à la tension de dérive amplifiée et stockée dans la mémoire analogique (94) fait varier le courant de polarisation de l'amplificateur (103) en sorte d'éliminer la tension de dérive de la force électro-motrice amplifiée qu'il délivre.

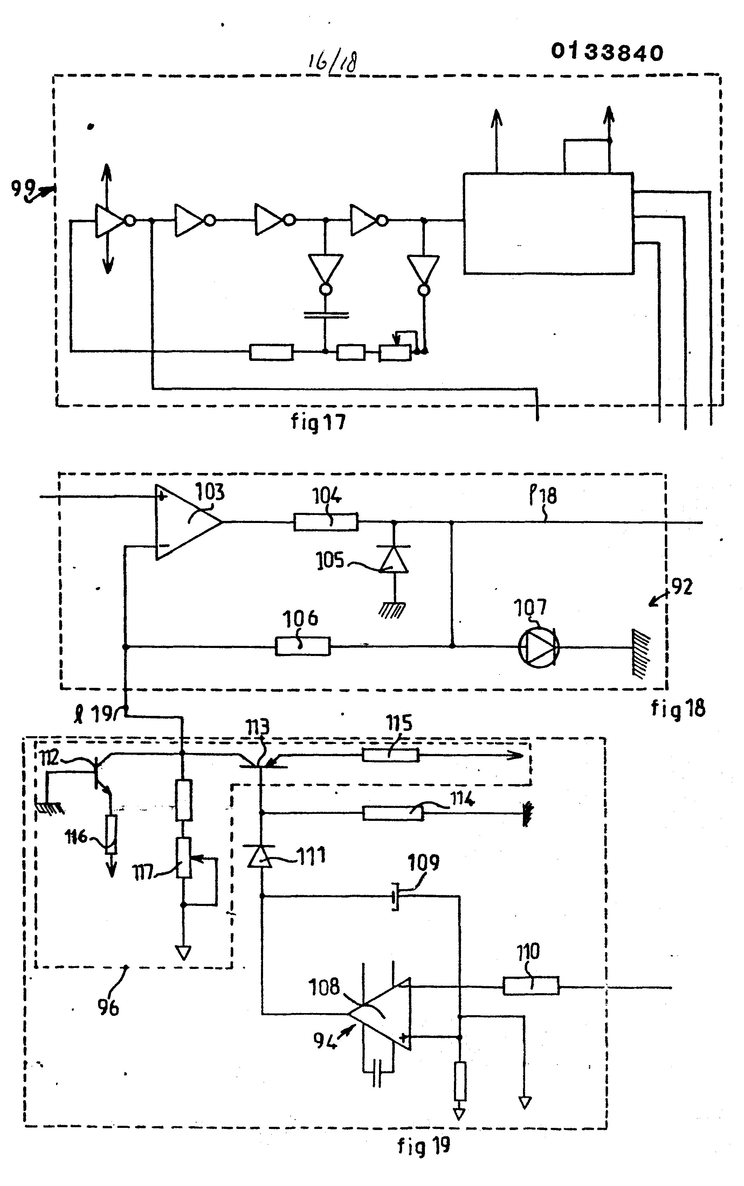

Ce circuit est représenté en figure 19 .

Sur cette figure est également représentée la mémoire analogique (94).

La mémoire analogique (94) est constituée de manière connue en soi par un amplificateur opérationnel (108) de gain égal à 1 et par un condensateur (109).

L'entrée inverseuse de cet amplificateur est reliée par l'intermédiaire d'une résistance (110) à la sortie du démultiplexeur (95) et par le condensateur (109) à la sortie du dit amplificateur.

Sur la sortie de cet amplificateur (108) est prélevée la valeur

0133840

analogique représentative de la tension de dérive.

Cette sortie attaque par l'intermédiaire d'une diode (111) le circuit de compensation.

Ce circuit est constitué par un générateur de courant.

Ce générateur de courant est relié à l'entrée inverseuse de l'amplificateur (103) et a pour but de faire varier le courant de polarisation de cet amplificateur.

Ce circuit comporte deux transistors (112) et (113) dont un le transsistor (112) est du type "NPN" et dont l'autre, le transistor (113) est du type "PNP".

La base du transistor (113) constitue l'entrée du circuit de compensation.

Cette base est reliée électriquement à la diode (111).

Cette base est polarisée par une résistance (114) connectée à la masse.

L'émetteur du transistor 113 reçoit une tension positive de 12 Volts par l'intermédiaire d'une résistance de polarisation (115). Le collecteur du transistor (113) est relié électriquement au collecteur du transistor (112).

La base de ce transistor est connectée à la masse du module (89) et l'émetteur de ce transistor reçoit une tension négative de douze volts par une résistance (116).

Sur le collecteur de chaque transistor est prélevé le courant de polarisation.

Ce courant est conduit à l'entrée inverseuse de l'amplificateur (103) de l'étage (92) par une ligne électrique (119).

Sur l'entrée inverseuse de l'amplificateur (103) est connectée une résistance variable (117) pour régler le gain général de l'ensemble.

Cette résistance variable est connectée à une source de potentiel.

On conçoit aisément que le circuit de compensation (96) et la mémoire analogique (94) constituent un circuit de contre réaction qui vise à annuler la tension de dérive ou suivant une autre optique, à ramener la lecture de la masse à zéro, cette lecture de la masse s'effectuant lorsque l'organe (91) sélectionne la ligne (117).

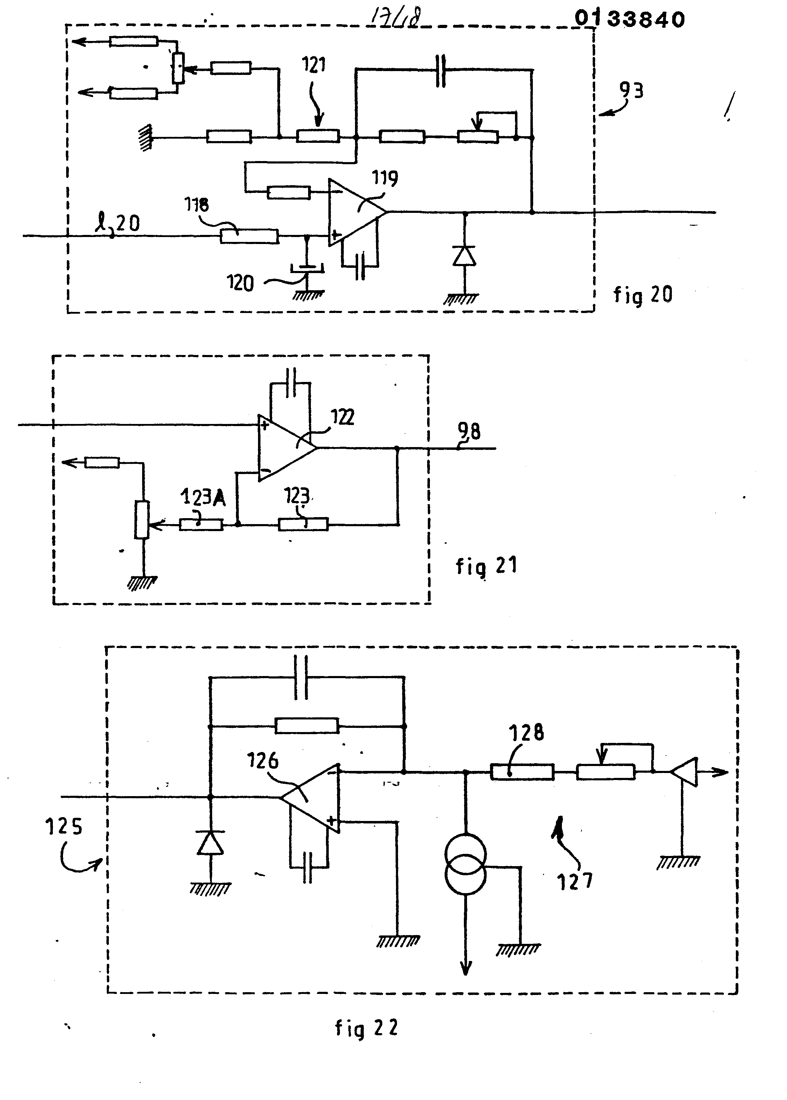

En figure 20 , on a représenté la mémoire analogique (93).

L'entrée de cette mémoire analogique (93) est connectée à une des sorties du démultiplexeur (95) par une ligne (120).

Sur cette ligne (120) est disposée une résistance (118).

La mémoire analogique (93) est constituée de manière connue en soi par un amplificateur opérationnel (119), par un condensateur polarisé (120) connecté entre la masse et l'entrée non inverseuse de cet amplificateur et par un circuit de contre réaction (121) fixant le gain du dit amplificateur à un.

L'entrée de la mémoire analogique est constituée par l'entrée non inverseuse de l'amplificateur opérationnel (119).

A cette entrée est connectée la résistance (118).

La sortie de la mémoire analogique est constituée par la sortie de l'amplificateur (119).

Comme dit précédemment, la sortie de la mémoire analogique est reliée à une des entrées de la carte entrées analogiques par un canal de transfert (98).

De préférence, comme on peut le voir en fig 21, ce canal de transfert (98) est équipé d'un amplificateur opérationnel (122).

L'entrée non inverseuse de cet amplificateur opérationnel est connectée à sortie de la mémoire analogique (93) et la sortie du dit amplificateur est connectée à la carte entrée analogique.

Cet amplificateur opérationnel comporte un circuit de contre réaction constitué par une résistance (123) connectée entre l'entrée inverseuse et la sortie de l'amplificateur.

Pour régler la dérive générale du module amplificateur (89), l'entrée inverseuse de l'amplificateur est attaquée par une tension continue ajustée par une résistance variable (123A).

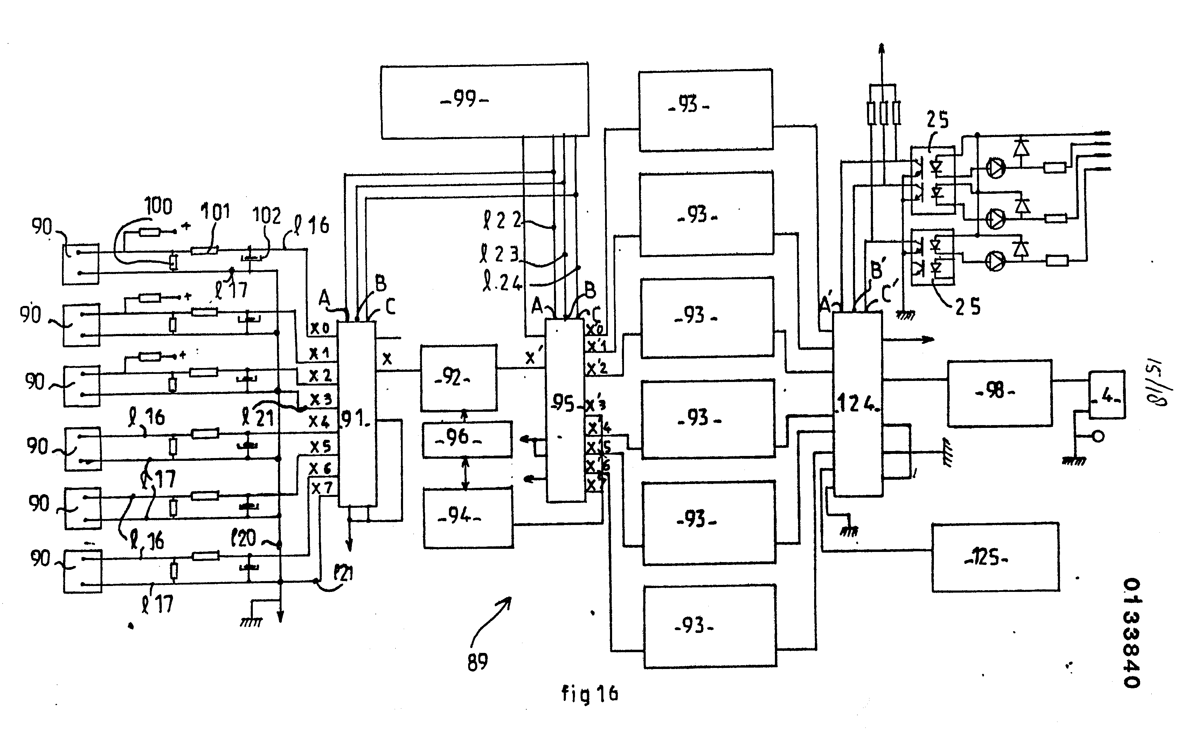

Selon l'exemple préférentiel de réalisation comme représenté en figure 16, le module d'amplification (89) procède à l'acquisition de six données analogiques délivrées par six thermo couples affectés à la mesure de la température d'une même zone du four à diffusion.

Ce module d'amplification comporte donc six voies d'entrées connectées chacune à un thermo couple et six mémoires analogiques (93) pour le stockage de la force électro motrice issue des thermo couples.

De préférence, à chaque voie d'entrée et donc à chaque thermo couple est affectée une mémoire analogique et une seule.

Comme dans l'exemple précédent, la force électro-motrice délivrée par un thermo couple est prélevée sur la ligne (116) correspondante et la tension de dérive ou tension d'offset est prélevée
sur la ligne (117) correspondante.

Comme la tension d'offset ou tension de dérive doit ^etre identique pour chacune des voies, les lignes (117) sont connectées à un
m^eme point de masse.

De préférence, les lignes (117) sont toutes connectées à une m^e-
me ligne électrique (120) elle-m^eme connectée à la masse.

Avantageusement, le module d'amplification procède à l'acquisition de la tension de dérive après avoir effectué successivement
trois acquisitions de force électro motrice délivrée par trois
thermo couples.

Le multiplexeur (91) comporte une sortie connectée à l'entrée de
l'étage d'amplification (92) et huit entrées référencées (X0) à
(X7) dont six sont connectées chacune à une ligne (116) et dont
deux sont connectées chacune à la ligne (120) par l'intermédiaire
d'une ligne (121)

De préférence, le multiplexeur débute la sélection des lignes
(116) ou (121) en sélectionnant la ligne connectée à son entrée
(X0) et en terminant la sélection des lignes (116) ou (121) en
sélectionnant la ligne connectée à son entrée (X7).
Les lignes (116) et (121) sont agencées de manière à ce que trois
lignes (116) soient suivies d'une ligne (121).

Ainsi l'étage (92) reçoit trois forces électro-motrices avant de

48

recevoir une tension de dérive ou tension d'offset. **0133840**

Le démultiplexeur (95) comporte une entrée connectée à la sortie de l'étage d'amplification (92) et huit sorties référencées (X'0) à (X'7) dont six sont connectées chacune à une mémoire analogique (93) et dont deux sont connectées à la mémoire analogique (94).

Le démultiplexeur débute la commutation de la sortie de l'étage (92) avec une mémoire analogique (93) et (94) en commutant la sortie du dit étage avec la mémoire connectée à sa sortie (X'0) et en terminant cette commutation des mémoires (93) et (94) en commutant la sortie de l'étage (92) avec la mémoire connectée à sa sortie (X'7).

Les mémoires analogiques (93) et (94) et les sorties (X'0) à (X'7) du démultiplexeur sont agencées de manière à ce que trois sorties connectées à trois mémoires analogiques soient suivies d'une sortie connectée à la mémoire analogique (94). Le multiplexeur et le démultiplexeur fonctionnent en synchronisme en sorte que dans la mémoire analogique (94) soit toujours stockée une tension de dérive ou tension d'offset et en sorte que dans chacune des mémoires (93) soit toujours stockée la force électro-motrice issue du thermo-couple auquel la dite mémoire est associée.

Dans ce but, le signal issu du circuit base de temps (99) régit le fonctionnement du multiplexeur et du démultiplexeur.
Comme on peut le voir en figure 16, les organes (91) et (95) possèdent trois entrées de commande référencées (A), (B) et (C) recevant le signal du circuit base de temps (99) par trois lignes électriques (122), (123), et (124).

En fonction des états logiques présents sur les entrées (A), (B), (C), l'organe (91) sélectionne la ligne (116) ou (117) correspondante et le démultiplexeur (95) assure la commutation de la sortie de l'étage (92) avec la mémoire (93) ou (94) correspondante.

On conçoit aisément que le module (89) commande lui-meme l'acquisition de ses différentes voies sans intervention de l'unité centrale de traitement.

Plus précisément, cette acquisition est commandée par le circuit base de temps.

Il est à noter que le multiplexage et le démultiplexage est effectué d'une manière très rapide en accord avec la vitesse de traitement de l'unité centrale.

Il est à noter également que la rapidité d'exécution du multiplexage et démultiplexage permet d'éviter toute altération de la valeur analogique stockée dans les mémoires (93) et (94), cette altération étant due à la décharge du condensateur de chacune de ces mémoires.

De préférence, selon la forme préférentielle de réalisation, le module (89) n'est équipé que d'un seul canal (98) de transfert du contenu des mémoires analogiques (93) vers une des entrées de la carte entrée analogique.

Pour transférer les données analogiques contenues dans les mémoires (93) sur le canal (98), le module (89) est équipé d'un multiplexeur (124) connecté aux dites mémoires analogiques et à l'entrée de l'amplificateur opérationnel (122) du dit canal.

0133840

Ce multiplexeur comporte au moins six entrées connectées chacune à une mémoire analogique et une sortie connectée à l'entrée de l'amplificateur opérationnel (122).

De préférence, le multiplexeur (124) comporte huit entrées.
Une des deux entrées non connectée à une des mémoires analogiques est connectée à la masse tandis que l'autre entrée est connectée à un circuit (125) de délivrance d'une tension analogique représentative de la température du milieu extérieur au controleur et au four à diffusion.

La sélection d'une des entrées du multiplexeur, cette sélection visant à commuter l'entrée de l'amplificateur (122) avec, soit une mémoire analogique ou soit avec le circuit (125), est commandée par l'unité centrale de traitement (1).
Dans ce but, l'unité centrale génère des signaux de sélection sur les trois entrées A', B', et C' du multiplexeur (124).

De préférence, ces signaux de sélection transitent par des optos coupleurs (25) logés sur le support (27) du module d'amplification (89).

Le circuit (125) est constitué par un amplificateur opérationnel (126) et par un générateur (127) générant une tension de référence représentative de la valeur de la température ambiante.
La sortie de l'amplificateur opérationnel (126) est connectée à une des entrées du multiplexeur.

L'entrée inverseuse de cet amplificateur reçoit du générateur (127) la tension de référence.

Pour ajuster cette tension de référence, le générateur (127) comporte un potentiomètre (128).

Selon une variante de réalisation, le module d'amplification (89) comporte plusieurs canaux de transferts (98) connectés chacun à une mémoire analogque et à une des entrées de la carte entrée analogique.

On conçoit aisément que le module d'amplification tel que précédemment décrit permet l'acquisition des données de manière très rapide tout en ayant une bande passante la plus réduite possible. Cette caractéristique permet une acquisition des données avec une grande précision de l'ordre de 1 pour 10.000.

Ainsi avec une température de chauffe égale à 1.000 degrés centigrades, toutes variations supérieures à 0,1 degrés sera perceptible par ce module d'amplification (89).

Le controleur de processus programmable est également équipé d'un module de régulation (16) de la température du four à diffusion.

Pour réguler cette température; le module (16) agit sur des organes qui interrompent ou rétablissent le fonctionnement des moyens de chauffage du four à diffusion.

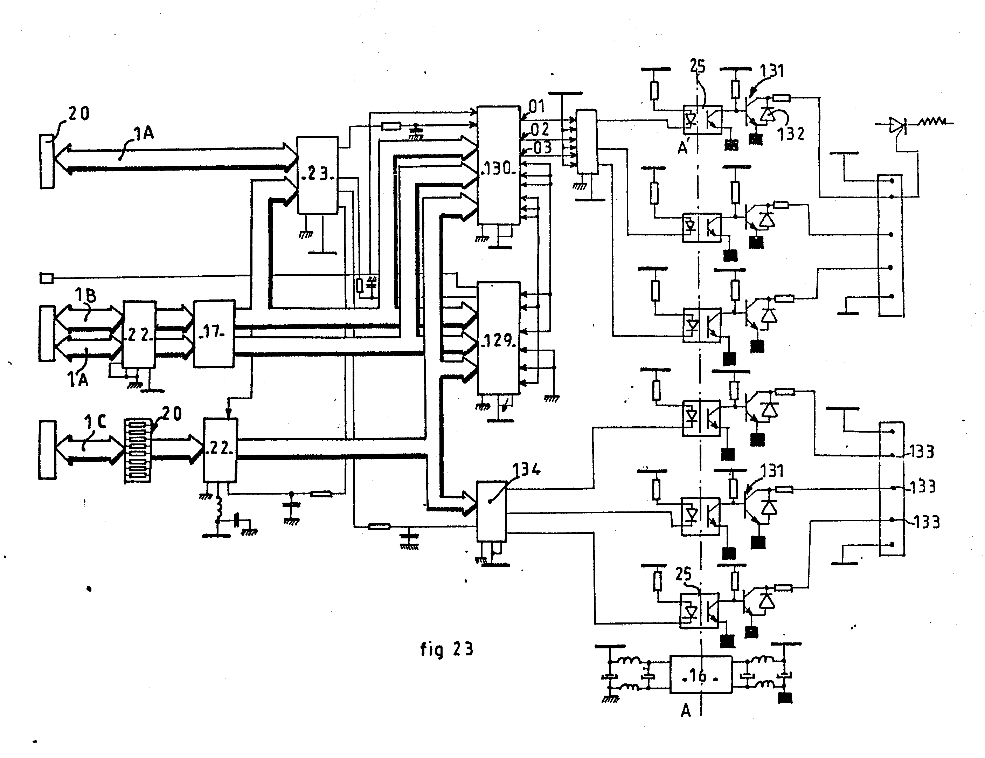

Ces moyens de chauffage représentés schématiquement en fig 23 sont par exemple constitués chacun par une résistance chauffante recevant son énergie du réseau de distribution.

Les organes sont avantageusement constitués chacun par un thyristor disposé sur le circuit d'alimentation de la résistance chauffante.

La gachette de ce thyristor est connectée au module de régulation.

Cette disposition offre l'avantage d'éviter de générer des harmoniques sur le réseau de distribution.

Un autre avantage de cette disposition réside dans le fait que aucune puissance réactive n'est consommée.

Ce module, comme on peut le voir en fig 23, comporte de préférence trois sorties connectées par boucle de courant à trois thyristors.

On conçoit aisément que lorsque les sorties du module de régulation sont portées à l'état haut, le thyristor associé à chacune des sorties est rendu passant et alimente la résistance chauffante auquel il est associé.

On conçoit également que la puissance du four et donc la température de celui-ci est conditionnée par la fréquence de l'état passant du thyristor, ou suivant un autre aspect, par la valeur du rapport de la durée (D) de l'état haut de la sortie correspondante sur une période de temps T.

Ce rapport noté "R" est égal à D/T.
De préférence, la valeur "T" est invariable seule, la valeur "D" est variable.

Selon l'exemple de réalisation, la valeur "T" est fixée égale à quatre secondes et la valeur "D" peut varier de 0,01 seconde en 0,01 seconde.

En prenant un exemple, on va expliquer la régulation de la puissance du four et donc de sa température.

Si R = 0,5, c'est à dire si D = 2, le thyristor sera rendu passant pendant 2 secondes et bloqué pendant 2 secondes.

Dans ce cas, la puissance du four sera égale à 50 % de sa puissance normale, ce qui correspond à une certaine valeur de la température du four.

Si cette température est incorrecte, celle-ci sera corrigée par modification de la valeur R, c'est-à-dire par modification de la valeur D.

A priori, la précision de la régulation de la puissance du four et donc de sa température est égale à 1 pour 400.

Mais, compte tenu de la grande inertie calorifique des fours à diffusion mis en oeuvre dans le cadre d'une fabrication de puces de circuit intégré, la précision de la régulation sera de l'ordre de celles des

thermo couples, c'est à dire de 1 pour 10.000.

De préférence, pour la régulation de la température, le module de régulation ne reçoit de la carte unité centrale qu'une valeur digitale représentative de la puissance désirée.

Ce module traite cette valeur digitale et calcule la valeur de D.

On conçoit aisément que cette disposition permet d'alléger le travail de l'unité centrale.

En se référant maintenant à la figure 23, on va décrire dans le détail le module de régulation.

Ce module reçoit le bus adresse (1A), le bus commande (1B) et le

bus données (1C).

Ce module est également équipé d'un circuit à logique programmable (23) pour la selection des différents boitiers.

Le circuit (23) reçoit principalement les lignes A8 à A15 du bus adresse par l'intermédiaire d'un réseau (20) de résistances.

Sur le bus commande et sur les lignes A0 et A2 du bus adresse est disposé un amplificateur tampon (22) et un réseau (17) d'adaptation en impédance.

Le bus données (1C) est doté d'un réseau (20) de résistance et d'un amplificateur tampon (22).

De plus, ce module est doté de deux bases de temps (129) et (130) qui délivrent respectivement la valeur T et la valeur D.

La base de temps (129) reçoit le bus données (1C), le bus commande (1B) et les lignes A0 à A2 et A7 du bus adresses (1A).

Par le bus donnée (1C), la base de temps (129) reçoit de l'unité centrale de traitement la valeur digitale représentative de la puissance désirée.

La seconde base de temps (130) est connectée également au bus données (1C), au bus adresse (1A) et au bus commande (1B).

Cette base de temps (130) comporte trois sorties référencées (01), (02) et (03) connectées chacune à une des sorties du module par l'intermédiaire d'un amplificateur tampon, d'un opto coupleur (25) et d'un transistor (131) dont la base est connectée au collecteur du photo transistor de l'opto coupleur (25).

Le collecteur du transistor (131) est connecté à une des sorties du module et l'émetteur de ce transistor est connecté à la masse.

Entre le collecteur et l'émetteur de ce transistor  est  disposée une diode (132).

Le fonctionnement des deux bases de temps est le suivant :
La première base de temps (129) pilote la seconde par  un  signal d'horloge dont la fréquence est de préférence égale à 100 HZ.
La seconde base de temps (130) lit dans la base de temps (129) la valeur digitale représentative de la puissance désirée et calcule pour chacune des sorties (O1), (O2), et (O3) la valeur D en tenant compte de la période T.

Ensuite, la seconde base de temps (130) porte à l'état haut  chacune de ces sorties pendant une durée donnée par la valeur D.
D'une autre manière sur les sorties (O1), (O2) et (O3) sont  présents des  crèneaux  positifs de période égale à quatre secondes mais de rapport cyclique variable en fonction de la valeur D.

De préférence, les deux bases de temps (129) et (130) sont  constituées  toutes  deux  par  une horloge programmable ou timer par exemple du type 6840 commercialisé par la firme "Motorala".

Avantageusement, l'unité centrale sélectionne les  mémoires  (93) du  module  d'amplification (89) par l'intermédiaire du module de régulation.
Dans ce but, ce module de régulation est équipé de  trois  autres sorties (133)  connectées  aux  optos  coupleurs  (25) du module d'amplification (89).
Ces trois sorties sont connectées à une mémoire tampon  (134)  ou latch relié au bus données (1C).
Dans cette mémoire tampon sont mémorisés les signaux de sélection

56

d'une des mémoires analogiques (93).                    **0133840**

De préférence, entre les optos coupleurs (25) et les sorties (133) sont disposés des transistors de la meme manière que précédemment décrit.

Comme dit précédemment, le controleur selon l'invention comporte un lecteur enregistreur de données sur un support magnétique.

Pour des raisons de fiabilité et de facilité d'emploi, ce lecteur enregistreur est du type de ceux recevant une bande magnétique disposée dans une cassette.

Le controleur tel que décrit présente une haute immunité aux bruits industriels et permet un controle rigoureux de différents paramètres physiques.
Ainsi ce controleur pourra assurer avec fiabilité le déroulement d'un processus industriel.

Il va de soi que la présente invention peut recevoir tous aménagements et toutes variantes sans pour autant sortir du cadr de la présente demande de brevet.

0133840

REVENDICATIONS :

1. Controleur de processus programmable du type de ceux comportant une unité centrale de traitement (1), un ou plusieurs boitiers mémoires mortes (2) pour le stockage du logiciel de base, un ou plusieurs boitiers mémoires vives (3) pour le stockage du logiciel d'application, un ou plusieurs modules entrées/-sorties (4), (5), (6), (7), (8), (9) et (10) assurant la communication du dit controleur avec le monde extérieur et notamment avec les organes de la machine qu'il commande, un module (89) d'acquisition d'un paramètre physique à controler, un module (16) de régulation de ce paramètre physique, un bloc (14) d'alimentation générale raccordé aux lignes (11) et (12) du réseau de distribution d'énergie électrique et un bus adresses (1A), un bus commande (1B) et bus données (1C) raccordés aux différents composants du controleur caractérisé en ce qu'il est doté de moyens pour le premunir des bruits industriels c'est à dire des parasites véhicules par les lignes (11) et (12), des parasites générés par les organes de la machine et des micro coupures et baisses de la tension du réseau de distribution.

2. Controleur de processus programmable selon la revendication 1 comportant des moyens pour le prémunir des parasites caractérisé en ce que au moins un de ces dits moyens est constitué par un réseau (17) d'adaptation en impédance des bus (1A), (1B) et (1C).

3. Controleur de processus programmable selon la revendication 1 comportant une carte unité centrale, une carte mémoire vive, des modules entrées/sorties (4), (5), (6) et (7), un module de régulation (16), et des moyens pour prémunir des parasites, chaque carte et chaque module caractérisé en ce que ces dits moyens comprennent notamment des réseaux à logique programmable (23), que chacun de ces réseaux est monté sur une carte ou sur un module et que chacun de ces dits réseaux est utilisé pour la sélection des composants de la carte ou du module sur laquelle ou sur lequel il se monte.

4. Controleur de processus programmable selon la revendication 1 comportant des modules entrées/sorties (4), (5), (6) et (7), un module de régulation (16) et des moyens pour prémunir ces différents modules des parasites, les dits modules étant dotés d'une plaque de circuit imprimé (27) ou support caractérisé en ce que les dits moyens comprennent notamment une barrière d'opto coupleurs (25), des blocs alimentation régénérés (26) et un support (27) de circuit imprimé multicouche dont le dessin, c'est à dire la répartition des lignes électriques est réalisé en sorte de laisser appara^itre deux zones (27A) et (27B) de part et d'autre de la barrière d'optos coupleurs, dont une la zone (27A) ne reçoit que les composants digitaux et est située en déça de cette barrière et dont l'autre la zone (27B) est située au-delà de la dite barrière et ne reçoit que les composants analogiques.

5. Controleur de processus programmable selon les revendications 1 et 4 caractérisé en ce que les deux zones (27A) et (27B) de chaque module sont séparées par une ligne droite fictive (AA') transversale à la plaque (27) et que les optos coupleurs (25) et les blocs alimentation (26) sont disposés à cheval sur cette ligne.

6. Controleur de processus programmable selon la revendication 1 comportant des moyens pour le prémunir des fluctuations de la tension d'alimentation, c'est-à-dire des micro-coupures et des baisses de tension caractérisé en ce que ces moyens comprennent un circuit (29) de détection sur les lignes (11) et (12), des fluctuations de la tension du réseau de distribution, et de délivrance d'un signal (s1) lorsque ces fluctuations sont détectées et d'un circuit (30) de remise à l'état initial qui délivre un signal (s2) à l'unité centrale de traitement (1) lorsqu'il détecte le signal (s1) en sorte de placer la dite unité centrale en configuration de sécurité maximale avant que les effets de cette fluctuation soit sensible au niveau de la carte unité centrale.

7. Controleur de processus programmable selon les revendications 1 et 6 caractérisé en ce que le circuit (30) est doté d'un compteur (40) pour maintenir présent le signal (s2) sur la broche (reset) de l'unité centrale pendant un temps prédéterminé après le retour du courant.

8. Controleur selon les revendications 1 et 6 caractérisé en ce que le circuit (30) est alimenté par une pile (42).

9. Controleur selon les revendications 1 et 6 caractérisé en ce que le circuit à logique programmable (23) de la carte unité centrale reçoit du circuit (29) le signal (s1) et génère un état bas sur sa broche (@interdite) lorsque le signal (s1) est perçu et en ce que cette broche (@interdite) est reliée au circuit de remise à l'état initial (30) qui génère le signal (s2) lorsqu'il détecte un état bas sur la dite broche (a interdite).

10. Controleur selon les revendications 1 et 6 caractérisé en ce que le circuit (29) est constitué par un comparateur (31) qui compare une tension continue de référnce à une tension délivrée par un pont redresseur (32) alimenté par le secondaire (33), d'un transformateur (34) dont le primaire (35) est relié électriquement aux lignes (11) et (12) du réseau de distribution.

11. Controleur selon les revendications 1 et 6 caractérisé en ce que le circuit (30) de remise à l'état initial comporte par quatre portes "Non et" (36), (37), (38) et (39) dont la première, la porte (36) détecte un état bas sur la broche (a interdite) du réseau (23) et dont la dernière, la porte (39) délivre le signal (s2).

12. Controleur de processus programmable selon la revendication 7 caractérisé en ce que le compteur (40) est piloté par une horloge (41).

13. Controleur de processus programmable selon les revendications 6, 7, 11 et 12 comportant un circuit de remise à l'état initial (30) constitué par un compteur (40) et par quatre portes "Non et" (36), (37), (38) et (39) dont une des entrées de la première, la porte "Non et" (36) est reliée à la broche (a interdite) du réseau (23) et dont la sortie de la quatrième, la porte "Non et" (38) est reliée à la broche (reset) de l'unité centrale (1) caractérisé en ce que l'autre entrée de la première porte "Non et" (36) est maintenue à l'état haut, que la sortie de cette porte est reliée respectivement à une des deux entrées de la deuxième porte "Non et" (37) et à la broche (CLR) d'initialisation du compteur que la seconde entrée de la deuxième porte "Non et" (37) est maintenue en état haut, que la sortie de la porte (37) est reliée à une des deux entrées de la troisième porte "Non et" (38) dont la seconde entrée est reliée à la sortie de la quatrième porte "Non et", que la sortie de la troisième porte "Non et" (38) est reliée à une des entrées de la quatrième porte "Non et" et à la broche (load) du compteur qui procéde au comptage des impulsions de l'horloge lorsque cette broche est en état haut, que la seconde entrée de la porte "Non et" est reliée à la broche (carry) du compteur, et que le dit compteur génère un état bas sur cette broche lorsqu'il a compté seize impulsions délivrées par l'horloge.

14. Controleur de processus programmable selon les revendications 1 et 8 dont la carte unité centrale comporte un bloc d'alimentation (43) et une pile (42) caractérisé par une porte (44) pour alimenter le circuit (30) par le bloc (43) en l'absence de coupure de courant et pour alimenter le circuit (30) par la pile en la présence de coupure de courant en sorte d'augmenter la durée de vie de la pile.

15. Controleur de processus programmable selon la revendication 1 et comportant une carte unité centrale dont le circuit à logique programmable (23) est relié par sa broche ( interdite) au circuit (30) de remise à l'état initial, et reçoit le bus adresse (1A) et le bus commnde (1B) caractérisé en ce que le dit circuit à logique programmable est programmé en sorte de générer un état bas sur sa broche (0 interdite) s'il détecte simultanément l'adresse d'une mémoire morte et un signal d'écriture.

16. Controleur de processus programmable selon Oa1 33840 -cation 1 et la revendication 8 caractérisé en ce que l'espace mémoire du controleur comporte une zone vierge et que le circuit à logique programmable (23) est programmé en sorte de générer un état bas sur sa broche ( interdite) lorsqu'il détecte une adresse de la zone vierge de l'espace mémoire.

17. Controleur de processus programmable selon la revendication 1 caractérisé par un circuit de surveillance du fonctionnement de l'unité centrale constitué: par un temporisateur programmable (53) qui génère périodiquement des interruptions non masquables reçues par l'unité centrale qui se déroute en séquence d'interruption, par le réseau à logique programmable (23) programmé pour générer un état bas sur sa broche (chien de garde) si l'unité centrale lors de la séquence de traitement de l'interruption porte certaines des entrées du dit réseau (23) en état haut ou bas suivant une certaine configuration, par un compteur par 16 (57) pour compter les impulsions délivrées par l'horloge (41), relié par sa broche (load) à la broche "chien de garde" du réseau (23) et par sa broche (carry) à l'entrée de la première porte "non et" (34) et agencé de manière à *etre initialisé si sa broche (load) reçoit un état bas et agencé de manière à produire un état bas sur l'entrée de la première porte (34) si la broche (load) n'a pas reçu un état bas avant la seizième impulsion comptée.

18. Controleur de processus industriel selon la revendication 1 comportant des modules entrées/sorties 4 à 7 caractérisé en ce que chaque module est équipé de moyens pour vérifier le fonctionnement de certains de ses composants par lesquels transitent les informations véhiculées par le bus données (1C).

19. Controleur programmable selon la revendication 18 caractérisé en ce que ces moyens sont constitués par le circuit à logique programmable (23) du module et par au moins un organe (58) de lecture des informations véhiculées par le bus données (1C) et reçues ou délivrées par le ou les amplificateurs tampons (22) équipant ce module.

20. Controleur de processus programmable selon la revendication 1 comportant un module entrée/sortie (4) comportant un convertisseur analogique digital (20) assurant la conversion de données analogiques délivrées par les organes de la machine en données digitales délivrées à l'unité centrale caractérisé en ce que le convertisseur (20) est disposé dans la zone analogique (27B) de ce module.

21. Controleur de processus programmable selon la revendication 20 dont le convertisseur analogique digital (20) reçoit un signal début de conversion appliqué sur sa broche (strobe) caractérisé en ce que le dit signal est délivré par le réseau à logique programmable (23) par l'intermédiaire d'un registre à décalage et d'un opto coupleur.

22. Controleur de processus programmable selon la revendication 1 comportant un module (5) de conversion de données digitales délivrées par l'unité centrale en données analogiques délivrées à des organes de la machine que commande le controleur caractérisé en ce que les convertisseurs (71) équipant ce module, sont disposés dans la partie analogique (27B) du support du dit module.

23. Controleur de processus programmable selon la revendication 1 comportant un module (89) d'acquisition et d'amplification de valeur analogiques représentatives d'un paramètre physique à controler par exemple une température régnant dans un four à diffusion, la dite valeur analogique représentative de la température étant délivrée par un thermo couple (90) caractérisé en ce que le dit module (89) est constitué par au moins une voie d'entrée constituée par deux lignes électriques (116) et (117) connectée chacune à une borne du thermo couple (90) et sur chacune desquelles est prélevé soit la force électro motrice générée par le thermo couple ou soit la tension de dérive ou tension d'offset, par un organe (91) pour sélectionner successivement la ligne (116) et la ligne (117), par un étage (92) d'amplification à grand gain pour amplifier d'une manière rapide soit la force électro motrice ou soit la tension de dérive, suivant la ligne (116) ou (117) sélectionnée, par au moins deux mémoires analogiques (93) et (94) pour le stockage de la force électro motrice amplifiée ou pour le stockage de la tension de dérive amplifiée, par au moins un organe de démultiplexage (95) placé entre les mémoires analogiques et la sortie de l'étage d'amplification (92) assurant la communication du dit étage avec une mémoire analogique suivant la ligne sélectionnée par l'organe (91), par un étage (96) de compensation de la tension de dérive par modification du courant de polarisation de l'étage (92) en fonction de la tension de dérive mémorisée dans la mémoire (94) et par au moins un canal (98) pour transférer la donnée stockée dans la mémoire analogique vers une des entrées du module (4).

24. Controleur de processus programmable selon 0133840 i-
cation 23 comportant un organe (91) constitué par un multiplexeur
de technologie CMOS et un démultiplexeur (95) de technologie CMOS
caractérisé en ce que ces deux organes (91) et (95) sont alimentés par une tension négative de 1,5 volts et par une tension
positive de quatre volts.

25. Controleur de processus programmable selon la revendication 23 caractérisé par un circit base de temps (99) délivrant
un m^eme signal aux organes (91) et (95).

26. Controleur de processus programmable selon la revendication 23 caractérisé en ce que le circuit de compensation (96)
est un générateur de courant.

27. Controleur de processus programmable selon la revendication 23 caractérisé par un amplificateur opérationnel (122) sur
le canal de transfert (98).

28. Contrleur de processus programmable selon la revendications 23 comportant six voies d'entrées raccordées une à une à
six thermo couples (90) caractérisé en ce que les lignes (117)
des voies d'entrées sont connectées à une ligne électrique (120)
elle-m^eme connectée à la masse du module en sorte que la tension
de dérive soit identique pour chacune des voies.

29. Controleur de processus programmable selon selon les
revendications 23 et 28 dont le module (89) comportant un multiplexeur (91) doté d'une sortie (X) et de huit entrèes (X0) à (X8)
dont six sont connectées aux lignes (116) caractérisé en ce que

66

les deux entrées restantes sont connectées à la ligne (120) par l'intermédiaire de deux lignes électriques (121).

30. Controleur de processus programmable selon les revendications 23 et 29 comportant un module (89) doté de six voies d'entrées caractérisé en ce que le dit module procède à l'acquisition de la tension de dérive aprés avoir effectué successivement trois acqusitions de force électro motrice.

31. Controleur de processus programmable selon les revendications 29 et 30 caractérisé en ce que les lignes (116) et (121) sont agencées de manière à ce que lorsque le multiplexeur adresse ses entrées en débutant par l'entrée (X0) et en terminant par l'entrée (X7), il sélectionne trois lignes (116) avant de sélectionner une ligne (121).

32. Controleur programmable selon la revendication 23 dont le module d'amplification (89)comporte un démultiplexeur (95) doté d'une entrée (X') et de huit sorties(X'0) à (X'7) dont six sont connectées une à une à six mémoires analogiques (93) caractérisé en ce que les deux sorties restantes du démultiplexeur sont connectées à la mémoire (94).

33. Controleur programmable selon la revendication 23 comportant six mémoires analogiques (93) caractérisé par un multiplexeur (124) pour commuter une des mémoires (93) avec le canal de transfert (98).

34. Controleur de processus programmable selon la revendication 33 caractérisé en ce que le multiplexur (124) reçoit de l'unité centrale de traitement des signaux de sélection d'une des mémoires (93).

35. Controleur de processus programmable selon la revendication 1 comportant un module de régulation de la température doté de trois sorties connectées chacune à la gachette d'un thyristor disposé sur le circuit d'alimentation d'un organe de chauffage du four caractérisé par des moyens pour générer sur chacune de ces sorties un créneau positif de durée "T" mais de rapport cyclique variable.

36. Controleur de processus programmable selon la revendication 35 caractérisé en ce que ces moyens sont constitués par deux bases de temps dont la première reçoit de l'unité centrale une information digitale représentative de la puissance de chauffe désirée et pilote la seconde base de temps et en ce que la seconde base de temps en fonction de la valeur digitale stockée dans la première base de temps génère le créneau de rapport cyclique variable.

37. Controleur de processus programmable selon la revendication 36 caractérisé en ce que les deux bases de temps sont constitués par des temporisateurs programmables.

38. Controleur de processus programmable selon la revendication 1 comportant un module entrées/sorties (10) associé à un lecteur enregistreur de données sur un support magnétique caractérisé en ce que ce lecteur enregistreur est du type de ceux recevant une bande magnétique disposée dans une cassette.

0133840

fig. 1

fig.2

0133840

Fig.3

Fig.4

Fig.5

6/18

01.33840

Fig. 6

0133840

Fig.7

8|18

fig.8

0133840

fig. 9

29

31A
31B
31C
31
32
33
34
35
42
41
43

0133840

fig 10

fig 11

20

21

fig.12

+12 V

-43-

46

44

45

42

+5V Bat

fig.13

0133840

+ Bat

48

+12 V

- 52 -

50

+ 5V
Bat

49

51

fig.14

fig.15

89

90  
77  
76  
100  
101  
102  
-91-  
-94-  -96-  -92-  78  
-95-  
-99-  
-93-  
98  
-1-

fig 16

fig 17

fig 18

fig 19

fig 20

fig 21

fig 22

18/18

fig 23

Office européen
des brevets

**RAPPORT DE RECHERCHE EUROPEENNE**

## DOCUMENTS CONSIDERES COMME PERTINENTS

| Categorie | Citation du document avec indication. en cas de besoin. des parties pertinentes | Revendication concernée | CLASSEMENT DE LA DEMANDE (Int Cl ³) |
|---|---|---|---|
| A | FR-A-2 357 007 (GULF AND WESTERN INDUSTRIES) * Page 4, lignes 7-21; figures planche IX/15 * | 1,2,4 | G 05 B 19/04 |
| A | J.B. PEATMAN: "Microcomputer-based design", 1977, pages 172-178, McGraw-Hill Book Company, New York, USA; * Pages 172-178 * | 1,2,4 | |
| A | DOUGLAS LEWIN: "Theory and design of digital computer systems", 1981, pages 338-345, Wheaton and Co. Ltd., Exeter, GB; * Pages 338-345 * | 1-5 | |
| A | ELECTRONICS, 8 août 1974, pages 109-114, MacGraw-Hill, New York, USA; G. REYLING: "PLAs enhance digital processor speed and cut component count" * Pages 109-114 * | 3 | DOMAINES TECHNIQUES RECHERCHES (Int. Cl. ³) <br><br> G 05 B 19 |

Le présent rapport de recherche a été établi pour toutes les revendications

| Lieu de la recherche | Date d'achèvement de la recherche | Examinateur |
|---|---|---|
| LA HAYE | 05-10-1984 | RESSENAAR J.P. |